# EUROPEAN PATENT SPECIFICATION

(11) **EP 3 522 613 B1**
(45) Date of publication and mention of the grant of the patent: **03.02.2021**
(21) Application number: 17863574.4
(22) Date of filing: 26.09.2017
(51) Int. Cl.: H04W 52/02

(54) **WAKEUP METHOD AND APPARATUS**
AUFWECKVERFAHREN UND -VORRICHTUNG
PROCÉDÉ ET DISPOSITIF DE RÉVEIL

(30) Priority: 25.10.2016 CN 201610940964
(43) Date of publication of application: 07.08.2019
(73) Proprietor: Huawei Technologies Co., Ltd., Longgang District Shenzhen, Guangdong 518129 (CN)
(72) Inventor: GUO, Yuchen, Shenzhen Guangdong 518129 (CN); ZHOU, Xun, Shenzhen Guangdong 518129 (CN); LIN, Meilu, Shenzhen Guangdong 518129 (CN); YANG, Xun, Shenzhen Guangdong 518129 (CN)
(74) Representative: Pfenning, Meinig & Partner mbB
(86) International application number: PCT/CN2017/103365
(87) International publication number: WO 2018/076988

(56) References cited:
- WO-A1-2016/107128
- CN-A- 102 484 854
- CN-A- 102 833 829
- CN-A- 104 838 700
- US-A1- 2010 150 043
- US-A1- 2013 235 773
- US-A1- 2015 245 290

## Description

### TECHNICAL FIELD

This application relates to the communications field, and in particular, to a wake-up method and apparatus.

### BACKGROUND

With evolution of WLAN (Wireless Local Area Network, wireless local area network) standards, the IEEE 802.11 working group is preparing for research and development work of 802.11 standards using a low power wake-up radio (LP-WUR, Low Power Wake-Up Radio) as a core technology to reduce power consumption of Wi-Fi (Wireless Fidelity, Wireless Fidelity).

In a Wi-Fi network, a large part of energy of a device is wasted in listening (idle listening) when no signal is received. Related solutions in legacy 802.11 standards (such as 802.11b/a/g/n/ac) are concentrated on optimizing sleep policies of devices. For example, using a station (Station, STA) as an example, when the STA does not receive or transmit any message, that is, in a "no data" phase, if the STA still persists in listening to a channel (idle listening), a lot of energy is consumed. Therefore, a sleep schedule (Sleep Schedule) is introduced, so that the STA can fall in deep sleep (Deep Sleep) when the STA does not receive or transmit data, to reduce energy consumption in idle listening. However, when the STA is in deep sleep, an access point (Access Point, AP) cannot communicate with the STA, and communication can be performed between the STA and the AP only after the STA wakes up. This may cause a latency (latency). To avoid a high latency caused by the sleep schedule, the STA usually complies with a sleep policy and occasionally wakes up to check whether there is data to be received. However, occasional wake-up of the STA without receiving or transmitting useful data consumes more energy than long-time sleep of the STA, and reduces sleep efficiency of the STA.

Therefore, to reduce waste of energy of a device in idle listening, an LP-WUR technology may be used. A core idea of the LP-WUR technology is that a receiving device (such as a STA) includes an LP-WUR part referred to as a WUR for short, in addition to an 802.11 primary radio (802.11 primary radio) in a legacy 802.11 protocol. Specifically, after the STA falls in deep sleep, the 802.11 primary radio of the STA falls in deep sleep, but the low power WUR wakes up and starts to work. If another device such as an AP needs to communicate with the STA, that is, the receiving device STA including the WUR and the 802.11 primary radio, the AP first transmits a wake-up frame (wake-up frame, WUF) to the WUR in a wake-up state in the STA; after correctly receiving the WUF transmitted to the WUR, the WUR wakes up the 802.11 primary radio in the STA, and the WUR falls in sleep; and the AP communicates with the 802.11 primary radio that is woken up. The 802.11 primary radio falls in sleep after completing communication with the AP. At the same time, the WUR wakes up and starts to listen again to determine whether a WUF is transmitted to the WUR, so as to wake up the 802.11 primary radio.

In this technology, the low power WUR is used to replace the 802.11 primary radio to listen to a channel, but energy consumption of the WUR in a listening/receiving state is about 0.1-1% of energy consumption of the 802.11 primary radio. Therefore, waste of energy during idle listening of the device can be reduced effectively.

To achieve low power consumption, designs of a circuit structure, a frame structure (WUP), and the like of the WUR need to be relatively simple and have low complexity. For example, the circuit structure of the WUR may include only energy detection (energy detection) and radio frequency (RF, radio frequency) parts, and therefore cannot demodulate signals modulated in some complex modulation modes. Therefore, the WUP may use an OOK (On-Off Keying, OOK) modulation mode that is easy to implement. Therefore, a transmission rate is also relatively low.

However, the AP periodically transmits a beacon frame of the legacy 802.11 standard, where the beacon frame carries a large amount of information, including a timestamp, a basic rate of a basic service set (Basic Service Set, BSS), a capability supported by the AP, and the like. After receiving the beacon frame, the STA may obtain a status and a parameter of a network, determine a working channel, and therefore start to transmit data.

Because functions supported by the beacon frame of the 802.11 system are numerous, a length of the beacon frame is also very long. If the WUF still uses the beacon frame (Beacon) transmission method in the legacy 802.11 system, a transmission rate of the WUF is relatively low. If excessive information is carried, a very long time is occupied on an air interface. This is disadvantageous to enhancement of network efficiency, and also reduces network robustness.

US 2010/0150043 A1 describes an asynchronous MAC based sensor node using a Wake-UP RF.

### SUMMARY

This invention provides embodiments of a wake-up method and apparatus according to the independent claims, and provides a wake-up frame structure, to reduce energy consumption of a receiving device by using a wake-up frame. Subsequently described aspects are to be considered embodiments of the present invention if, and only if, falling within the scope of the appended claims.

### BRIEF DESCRIPTION OF DRAWINGS

FIG. 1 is a schematic diagram of a communications system according to an embodiment of this application;
FIG. 2 is a schematic flowchart of a wake-up method according to an embodiment of this application;
FIG. 3 is a schematic diagram of a first wake-up frame according to an embodiment of this application;
FIG. 4 is another schematic diagram of a first wake-up frame according to an embodiment of this application;
FIG. 5 is still another schematic diagram of a first wake-up frame according to an embodiment of this application;
FIG. 6 is still another schematic diagram of a first wake-up frame according to an embodiment of this application;
FIG. 7 is still another schematic diagram of a first wake-up frame according to an embodiment of this application;
FIG. 8 is still another schematic diagram of a first wake-up frame according to an embodiment of this application;
FIG. 9 is a schematic flowchart of a wake-up method according to another embodiment of this application;
FIG. 10 is a schematic flowchart of a wake-up method according to still another embodiment of this application;
FIG. 11 is a schematic block diagram of a transmitting device according to an embodiment of this application;
FIG. 12 is a schematic block diagram of a WUR of a receiving device according to an embodiment of this application;
FIG. 13 is a schematic block diagram of a transmitting device according to another embodiment of this application;
FIG. 14 is a schematic block diagram of a WUR of a receiving device according to another embodiment of this application;
FIG. 15 is a schematic block diagram of a transmitting device according to still another embodiment of this application;
FIG. 16 is a schematic block diagram of a WUR of a receiving device according to still another embodiment of this application;
FIG. 17 is a schematic block diagram of a transmitting device according to still another embodiment of this application;
FIG. 18 is a schematic block diagram of a WUR of a receiving device according to still another embodiment of this application;
FIG. 19 is a schematic block diagram of a transmitting device according to still another embodiment of this application;
FIG. 20 is a schematic block diagram of a WUR of a receiving device according to still another embodiment of this application;
FIG. 21 is a schematic block diagram of a transmitting device according to still another embodiment of this application; and
FIG. 22 is a schematic block diagram of a WUR of a receiving device according to still another embodiment of this application.

### DESCRIPTION OF EMBODIMENTS

The following describes the technical solutions in embodiments of this application with reference to the accompanying drawings.

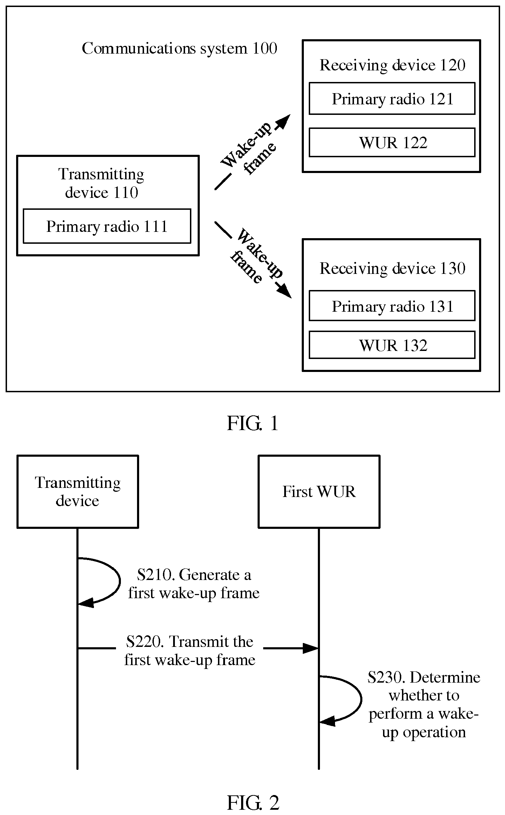

FIG. 1 is a schematic diagram of a communications system 100 according to an embodiment of this application. Specifically, the communications system 100 may include a transmitting device and at least one receiving device. For example, in FIG. 1, it is assumed that the communications system 100 includes one transmitting device 110 and two receiving devices 120 and 130. The communications system 100 may further include other receiving devices, and all the other receiving devices in the communications system 100 may be the same as the receiving device 120 or 130 shown in FIG. 1. The transmitting device in the communications system 100 may be an AP, that is, the transmitting device 110 may be an AP. The transmitting device 110 includes a primary radio 111, and the primary radio 111 is configured to exchange information with the receiving device in the communications system 100. The receiving device in the communications system 100 may be a STA, that is the receiving device 120 and the receiving device 130 may be STAs. Each receiving device includes a primary radio and a WUR. For example, the receiving device 120 includes a primary radio 121 and a WUR 122; and the receiving device 130 includes a primary radio 131 and a WUR 132. The receiving device may exchange information with the transmitting device by using the primary radio or the WUR.

The technical solutions in the embodiments of this application may be applied to various communications systems, such as a Global System for Mobile Communications (Global System for Mobile communications, GSM) system, a Code Division Multiple Access (Code Division Multiple Access, CDMA) system, a Wideband Code Division Multiple Access (Wideband Code Division Multiple Access, WCDMA) system, a general packet radio service (General Packet Radio Service, GPRS), a Long Term Evolution (Long Term Evolution, LTE) system, an LTE frequency division duplex (Frequency Division Duplex, FDD) system, an LTE time division duplex (Time Division Duplex, TDD) system, a Universal Mobile Telecommunications System (Universal Mobile Telecommunications System, UMTS), and a Worldwide Interoperability for Microwave Access (Worldwide Interoperability for Microwave Access, WiMAX) communications system.

It should be understood that, in the embodiments of this application, the AP may provide an access service for the STA. The AP may be an access point in a WLAN, or may be a base transceiver station (Base Transceiver Station, BTS) in the GSM or CDMA system, or may be a NodeB (NodeB) in WCDMA system, or may be an evolved NodeB (evolved NodeB, eNB, or eNodeB) in LTE system. This is not limited in this application.

In the embodiments of this application, the STA may be various STAs supporting WLAN communications protocols, or may be a terminal (Terminal), user equipment (User Equipment), a mobile station (Mobile Station, MS), a mobile terminal (Mobile Terminal), or the like in GSM or CDMA or WCDMA. The station may communicate with one or more core networks by using a radio access network (Radio Access Network, RAN). For example, the station may be a mobile phone (or referred to as a "cellular" phone), a smart household, a computer having a mobile terminal, or the like. For example, the station may also be a portable, pocket-sized, handheld, computer built-in, or vehicular mobile apparatus. The station exchanges voice and/or data with the radio access network.

Because a large part of energy of a device in a Wi-Fi network is wasted in listening (idle listening) when no signal is received, an LP-WUR technology may be used to reduce energy consumption of the system. Specifically, using interaction between the transmitting device 110 and the receiving device 120 as an example, when the receiving device 120 does not need to communicate with the transmitting device 110, the receiving device 120 may fall in deep sleep, that is, the primary radio 121 of the receiving device 120 falls in deep sleep, but the WUR 122 wakes up and starts to work. When the transmitting device 110 needs to communicate with the receiving device 120, the transmitting device 110 may transmit a wake-up frame (WUP) to the receiving device 120. When receiving the WUP transmitted to the WUR 122, the WUR 122 of a receiving device 120wakes up the primary radio 121 of the receiving device 120. In this case, the primary radio 121 wakes up from a deep sleep state and enters a work state, but the WUR 122 enters a sleep state. The transmitting device 110 performs communication such as data transmission with the primary radio 121 that wakes up and enters the work state. In addition, after the communication is complete, the primary radio 121 reenters the sleep state, and the WUR 122 wakes up and starts to listen to a WUP transmitted by the transmitting device 110 to the WUR 122, to wake up the primary radio 121 again. The foregoing steps are sequentially performed cyclically.

It should be understood that, the WUR 122 of the receiving device 120 can wake up only the primary radio 121. Similarly, the WUR 132 of the receiving device 130 can wake up only the primary radio 131. Therefore, that the WUR of the receiving device wakes up the primary radio in the embodiments of this application means that the WUR wakes up the primary radio of the receiving device.

FIG. 2 is a schematic flowchart of a wake-up method 200 according to an embodiment of this application. The method 200 may be applied to a communications system. The communications system includes a transmitting device and at least one receiving device. Each of the at least one receiving device includes a primary radio and a WUR. The communications system may be the communications system 100 shown in FIG. 1. As shown in FIG. 2, the method 200 includes the following steps.

S210. A transmitting device generates a first wake-up frame, where the first wake-up frame includes a WUR identifier field and a wake-up field, the WUR identifier field is used to indicate a WUR in a target WUR group, the target WUR group includes n WURs in WURs of at least one receiving device in a communications system, the wake-up field is used to indicate whether each WUR in the target WUR group performs a wake-up operation, the wake-up operation is waking up, by a first WUR of a first receiving device, a first primary radio of a first receiving device i, and the first WUR is any WUR in the target WUR group.

In this embodiment of this application, the transmitting device transmits the wake-up frame to the receiving device, where the wake-up frame may be intended only for the first receiving device in the at least one receiving device in the communications system, and another wake-up frame is used to indicate another receiving device. This can reduce a size of the wake-up frame, and ensure reliability of receiving the wake-up frame by the WUR of the receiving device.

Specifically, the transmitting device configures a WUR identifier (WUR ID) for a WUR of each receiving device. The transmitting device generates the first wake-up frame, where the first wake-up frame is used to indicate whether WURs of n receiving devices in the at least one receiving device in the communications system perform wake-up operations. In this case, the WUR identifier field in the first wake-up frame may be used to indicate the n WURs. Specifically, the WUR identifier field may use WUR IDs to indicate the target WUR group, where the target WUR group comprises the n WURs, and the n WURs may be n WURs whose WUR IDs are continuous, or may be n WURs whose WUR IDs are discontinuous.

It should be understood that, WUR ID information in this embodiment of this application may be a complete or short network identifier of a WUR, or other information that may distinguish different WURs.

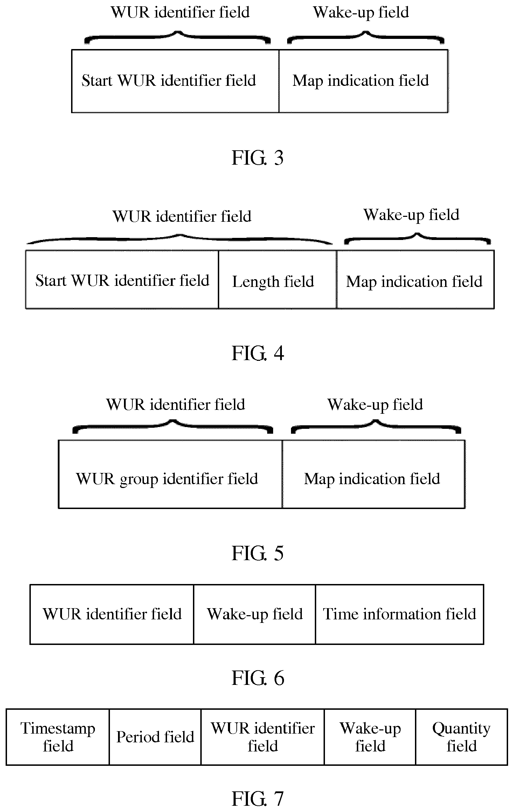

Optionally, in an embodiment, the target WUR group indicated by the WUR identifier field in the first wake-up frame includes n WURs, where the n WURs may be n WURs whose identifiers are continuous. Specifically, as shown in FIG. 3, the WUR identifier field may include start WUR identifier information. For example, a start WUR identifier field is used to indicate the WUR identifier information. In this case, the first WUR of the first receiving device in the at least one receiving device determines an identifier of a start WUR based on the start WUR identifier field, and then determines, based on a value of n, whether the first WUR belongs to the target WUR group indicated by the WUR identifier field, where the first receiving device is any one of the at least one receiving device in the communications system.

For example, if n = 5, and the start WUR identifier field indicates that the WUR ID of the start WUR is STA 13, the target WUR group indicated by the WUR identifier field includes five WURs, where the five WURs are respectively WUR IDs 13-17. Assuming that a WUR ID of the first WUR is 15, the first WUR belongs to the target WUR group; or assuming that a WUR ID of the first WUR is 19, the first WUR does not belong to the target WUR group.

Optionally, the value of n may be a preset value. Specifically, the value of n may be set to a fixed value. To be specific, for a plurality of wake-up frames transmitted by the transmitting device, each wake-up frame is similar to the first wake-up frame, and the value of n in the target WUR group indicated in each wake-up frame is a fixed value. For example, a fixed length may be specified by a standard. Optionally, the transmitting device may further transmit the value of n to the receiving device in advance. For example, the transmitting device may be an AP, and the receiving device is a STA. In this case, the AP may transmit the value of n to the STA by using a broadcast frame; and the STA receives the value of n by using a primary radio, and transmits the value of n to the WUR of the STA.

Optionally, the value of n may be further determined based on the first wake-up frame. To be specific, the WUR identifier field may further include length information. For example, the length information is indicated by using a length field, that is, the length field is used to indicate the value of n. Specifically, as shown in FIG. 4, the WUR identifier field may include two parts, which are respectively a start WUR identifier field and a length field. The start WUR identifier field is used to indicate the identifier of the start WUR in the n continuous WURs, and the length field is used to indicate the value of n. The WUR of the receiving device, for example, the first WUR, determines, based on the start WUR and the value of n, whether the first WUR belongs to the target WUR group.

Optionally, in an embodiment, the target WUR group indicated by the WUR identifier field in the first wake-up frame includes n WURs, where the n WURs may also be n WURs whose identifiers are discontinuous, but the n WURs in the target WUR group belong to a same group, that is, the WUR identifier field is used to indicate a WUR group identifier. For example, as shown in FIG. 5, the WUR identifier field may be a WUR group identifier field, that is, the WUR group identifier field is used to indicate an identifier of the target WUR group. Specifically, the transmitting device may group the WURs of the at least one receiving device in the communications system according to a preset condition of the receiving device, and allocate a group identifier to each WUR group. The preset condition may include at least one of a power consumption requirement, a traffic latency requirement, and a traffic type of each of the at least one receiving device.

For example, the transmitting device may group receiving devices of a same traffic type into one group based on the traffic type of each receiving device, that is, WURs of the receiving devices of the same traffic type belong to a same group. The WURs of the at least one receiving device may be grouped into a plurality of WUR groups, and the transmitting device allocates a group identifier to each WUR group. In this case, the WUR identifier field in the first wake-up frame is used to indicate a group identifier, that is, the n WURs in the target WUR group belong to a same group, and the group identifier in the WUR identifier field is used to determine the WUR group.

For another example, the transmitting device may further perform grouping based on different latency requirements of receiving devices, and group receiving devices having similar latency requirements into one group, so that the receiving devices in this group obtain a same latency effect.

It should be understood that, the first wake-up frame further includes the wake-up field, where the wake-up field is used to indicate whether each WUR in the target WUR group performs a wake-up operation, and the wake-up operation is waking up, by the WUR, a primary radio. Specifically, for example, the wake-up field may be a map indication field, as shown in FIG. 3 to FIG. 5. The map indication field may be a bit sequences, where a one-to-one correspondence exists between each bit and each WUR in the target WUR group, that is, one bit corresponds to one WUR in the target WUR group. For example, "1" may be used to indicate that a corresponding WUR can perform a wake-up operation, and "0" indicates that a corresponding WUR does not perform a wake-up operation.

For example, the n WURs indicated by the WUR identifier field are four WURs, which are WURs 11, 12, 13, and 14 respectively. The map indication field may indicate, by using four bits, for example, "1011", whether the four WURs perform wake-up operations. In this case, the map indication field indicates that the WURs 11, 13, and 14 perform wake-up operations, but the WUR 12 does not perform a wake-up operation.

In this embodiment of this application, to further reduce power consumption of a WUR in receiving a wake-up frame, WURs of the transmitting device and the receiving device may determine a first period value. Based on the first period value, the transmitting device transmits the wake-up frame to the WUR in the target WUR group, and the WUR of the receiving device receives the wake-up frame. Specifically, the transmitting device may transmit the first wake-up frame at a first time point, where the first wake-up frame is used to indicate whether the n WURs in the target WUR group perform the wake-up operations; using the first WUR in the target WUR group as an example, the first WUR receives the first wake-up frame at the first time point; the transmitting device determines a second time point based on the first period value, and transmits a second wake-up frame at the second time point, where a structure of the second wake-up frame is the same as that of the first wake-up frame, and the second wake-up frame is used to indicate whether the n WURs in the target WUR group in the first wake-up frame perform the wake-up operations; and the first WUR receives the second wake-up frame at the second time point.

It should be understood that, after receiving the first wake-up frame at the first time point, the first WUR determines that the first WUR belongs to the target WUR group indicated by the WUR identifier field in the first wake-up frame. Therefore, the first WUR may determine the first period value, and determine to receive the second wake-up frame at the second time point. In this case, the first WUR may be in a sleep state between the first time point and the second time point, and does not detect a wake-up frame from the transmitting device, to reduce energy consumption of the first WUR.

It should be understood that, the transmitting device may further transmit another wake-up frame between the first wake-up frame and the second wake-up frame, where the another wake-up frame is used to indicate whether another WUR beyond the target WUR group performs a wake-up operation.

Optionally, the WURs of the transmitting device and the receiving device may determine the first period value by using the first wake-up frame. Using FIG. 6 as an example, the transmitting device generates the first wake-up frame, the first wake-up frame may include a time information field, and the time information field is used to indicate the first period value. Specifically, the time information field indicates the first period value, and may be in units of milliseconds (or seconds or microseconds or the like). For example, the time information field may be in units of seconds. If the time information field indicates 1, it indicates that the first period value is one second. Optionally, the time information field may also be a quantity of wake-up frames. For example, the time information field may indicate 4, but a time interval between any two consecutive wake-up frames transmitted by the transmitting device is 0.5 seconds. In this case, the first period value is equal to a total time of four wake-up frames, that is, two seconds.

Optionally, the time information field may further include period information and quantity information. For example, the period information may be indicated by using a period field, and the quantity information may be indicated by using a quantity field. To be specific, the time information field may include the period field and the quantity field, and the first period value is determined by using both the period field and the quantity field, where the period field is used to indicate a period of transmitting a wake-up frame by the transmitting device, and the quantity field is used to indicate a quantity of wake-up frames transmitted between transmitting the first wake-up frame and transmitting the second wake-up frame by the transmitting device. For example, the period field indicates that a period of transmitting a wake-up frame by the transmitting device is 0.3 second, and the quantity field indicates 4. In this case, after the transmitting device transmits the first wake-up frame at the first time point, a transmitted fourth wake-up frame is the second wake-up frame, the second wake-up frame is used to indicate whether the n WURs in the target WUR group in the first wake-up frame perform the wake-up operations, and a period of transmitting each of the four wake-up frames by the transmitting device is 0.3 second, that is, the second time point of transmitting the second wake-up frame is 1.2 seconds after the first time point.

Optionally, in an embodiment, using FIG. 6 as an example, FIG. 6 is a schematic diagram of a first wake-up frame according to an embodiment of this application. The first wake-up frame is used by the WUR in the target WUR group to determine whether to perform a wake-up operation. The first wake-up frame includes a WUR identifier field, a wake-up field, and a time information field. The time information field may include a timestamp field, a period field, and a quantity field. Specifically, the timestamp (Timestamp) field is used to indicate a system time of transmitting the first wake-up frame by the transmitting device, so that the receiving device synchronizes the time; the period field is used to indicate a period of transmitting each wake-up frame by the transmitting device, that is, a time interval between any two consecutive wake-up frames transmitted by the transmitting device; the WUR identifier field is used to indicate a WUR in the target WUR group, and the WUR identifier field may be the WUR identifier field in FIG. 3 to FIG. 5; the wake-up field is used to indicate whether each WUR in the target WUR group performs a wake-up operation, and the wake-up field may be the wake-up field in FIG. 3 to FIG. 5; and the quantity field is used to indicate which wake-up frame the second wake-up frame transmitted by the transmitting device is. For example, when the quantity field indicates 4, and the WUR identifier field in the first wake-up frame indicates WURs 10 to 20, the fourth wake-up frame after the transmitting device transmits the first wake-up frame is the second wake-up frame, where the WUR identifier field in the second wake-up frame also indicates the WURs 10 to 20. The second wake-up frame is used to indicate whether the WURs 10 to 20 perform the wake-up operations, and a specific time of transmitting the fourth wake-up frame may be determined based on the timestamp field and the period field.

Optionally, the WURs of the transmitting device and the receiving device may further preset the first period value. Specifically, the transmitting device may determine at least one period value based on a power consumption requirement and/or a traffic latency requirement of the receiving device, and transmit the at least one period value to the receiving device, so that the receiving device determines the first period value from the at least one period value. In addition, when the transmitting device configures a plurality of period values for the receiving device, the primary radio of the receiving device determines the first period value from the plurality of period values, and feeds back the first period value to the transmitting device.

Specifically, for example, the transmitting device is an AP, and the receiving device is a STA. Because different STAs have different requirements on latencies, energy saving effects, and the like, the AP may determine different transmit period values for different STAs based on different requirements of the STAs on latencies and power consumption. For example, when the first WUR has a relatively high requirement on a latency, a period of transmitting a wake-up frame to the first WUR may be set to be relatively short; or when the first WUR has a relatively low requirement on a latency, a period of transmitting a wake-up frame to the first WUR may be set to be relatively long. This is not limited in this embodiment of this application.

Specifically, for example, the transmitting device allocates the first period value to the first WUR. The transmitting device may receive request information transmitted by the first receiving device, where the request information is used to indicate a power consumption requirement and/or a latency requirement of the first receiving device. The transmitting device allocates one or more period values to the first receiving device based on the request information. The first primary radio of the first receiving device receives at least one period value, and determines the first period value from the at least one period value. In this case, the first primary radio transmits feedback information to the transmitting device, where the feedback information is used to indicate the first period value, and the first primary radio notifies the first WUR of the first period value.

Optionally, the transmitting device may further allocate a WUR ID to the first WUR based on the period value allocated to the first WUR, that is, a correspondence exists between the WUR ID and the period value. For example, if the WUR ID is smaller, the corresponding period value is smaller. In this case, the first WUR determines both the WUR ID and the first period value.

In this embodiment of this application, the transmitting device and the first WUR may further update the first period value, and when a correspondence exists between the WUR ID and the first period value, may also correspondingly update the WUR ID. Specifically, the transmitting device currently transmits the first wake-up frame and the second wake-up frame to the first WUR by using the first period value. If the first WUR needs to update the first period value, the first primary radio of the first receiving device may transmit request information to the transmitting device, where the request information is used to request the transmitting device to update the period value for the first WUR. Optionally, the request information may further include a current power consumption requirement and/or traffic latency requirement of the first receiving device. The transmitting device reallocates a period value to the first WUR of the first receiving device based on the request information. Optionally, the transmitting device may configure at least one updated period value for the first receiving device; the first receiving device determines a second period value from the at least one updated period value, where the second period value is used to update the first period value; and the first receiving device feeds back the second period value to the transmitting device, so that the transmitting device also updates the first period value to the second period value. When a correspondence exists between an identifier of the first WUR and the first period value, when updating the first period value to the second period value, the first WUR also updates the WUR ID to a WUR ID corresponding to the second period value. Likewise, the transmitting device also updates the identifier of the first WUR.

Because the transmitting device may transmit at least one period value to the first receiving device when the transmitting device configures the first period value for the first WUR of the first receiving device, optionally, when the transmitting device transmits a plurality of period values to the first receiving device, the first receiving device determines at least two period values from the plurality of period values, where the at least two period values include the first period value; and the first receiving device feeds back the at least two determined period values and the currently used first period value to the transmitting device. When the first receiving device needs to update the first period value, the first receiving device may determine the second period value from the at least two period values, and feed back the second period value to the transmitting device. The transmitting device transmits response information to the first receiving device, where the response information is used to indicate that the transmitting device accepts or rejects the second period value. If the transmitting device accepts the second period value, both the transmitting device and the first receiving device update the first period value to the second period value. If the transmitting device rejects the second period value, the transmitting device and the first receiving device do not update the first period value to the second period value, and the transmitting device and the first receiving device still use the first period value, or the first receiving device may reselect an updated period value, requesting to update the period value again. This is not limited in this embodiment of this application.

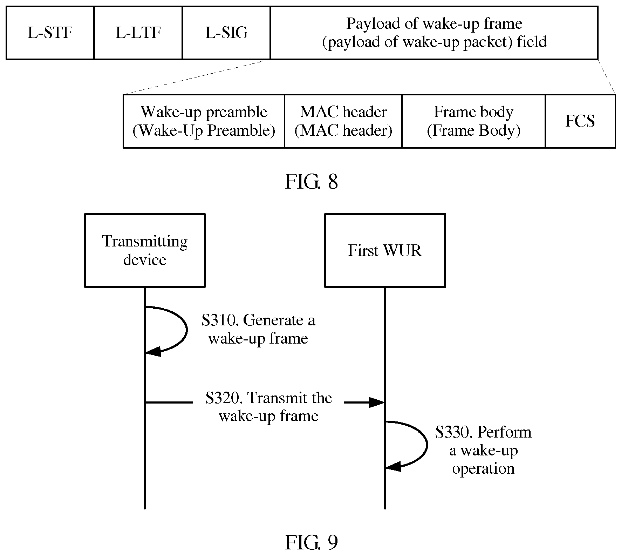

In this embodiment of this application, based on FIG. 3 to FIG. 7, the first wake-up frame generated by the transmitting device includes a WUR identifier field and a wake-up field, and may further include a time information field, and optionally, may further include another field. For example, FIG. 8 is a schematic diagram of a wake-up frame according to an embodiment of this application, where any wake-up frame transmitted by the transmitting device may be shown in FIG. 8.

Specifically, as shown in FIG. 8, the wake-up frame may include a legacy 802.11 preamble (Legacy 802.11 preamble) part, where the preamble part includes a legacy short training field (Legacy Short Training Field, L-STF) field, a legacy long training field (Legacy Long Training Field, L-LTF) field, and a legacy signaling field (Legacy Signal Field, L-SIG) field, and the preamble part is used by a nearby 802.11 device to recognize the frame structure as a wake-up frame. In addition, the nearby 802.11 device does not preempt a channel in a time period, so that a subsequent part of the wake-up frame is protected from interference. The wake-up frame further includes a payload field of the wake-up frame (payload of wake-up packet). This part may use a binary amplitude shift keying (On-Off Keying, OOK) modulation mode and can be recognized only by the WUR. The payload field may include a wake-up preamble (Wake-Up Preamble), a Medium Access Control (Medium Access Control, MAC) header (MAC Header), a frame body (frame body), and a frame check sequence (Frame Check Sequence, FCS) . The wake-up preamble may be used by the WUR to recognize the wake-up frame. The MAC header part may be used to distinguish different WURs. For example, the MAC header may be a WUR ID. The frame body may carry some other information, for example, a channel location of the primary radio of the receiving device, parameter configurations after the primary radio is woken up, for example, a bandwidth and an antenna quantity, or an action after the primary radio is woken up, for example, receiving data transmitted by the transmitting device after the primary radio is woken up. The FCS is used to ensure consistency of received data and transmitted data.

Optionally, the WUR identifier field, the wake-up field, and the like that are included in the first wake-up frame in this embodiment of this application may be located in the frame body part.

S220. The transmitting device transmits the first wake-up frame to the first receiving device.

It should be understood that, the transmitting device may transmit the first wake-up frame by broadcast. The receiving device receives the first wake-up frame by using the WUR. To be specific, WURs of all receiving devices in the communications system can receive the first wake-up frame, and determine, by using the WUR identifier field in the first wake-up frame, whether to perform wake-up operations.

For example, the first WUR is any WUR in the target WUR group indicated by the WUR identifier field. In this case, the first WUR receives the first wake-up frame, determines that the first WUR belongs to the target WUR group, and may continue to perform S230. For a second WUR, the second WUR does not belong to the target WUR group indicated by the WUR identifier field. In this case, after receiving the first wake-up frame, the second WUR does not perform S230, and may ignore the first wake-up frame.

S230. The first WUR receives the first wake-up frame, determines, based on the WUR identifier field in the first wake-up frame, that the first WUR belongs to the target WUR group, and then determines, based on the wake-up field in the first wake-up frame, whether to perform the wake-up operation, where the wake-up operation is waking up, by the first WUR, the first primary radio.

It should be understood that, the waking up, by the first WUR, the first primary radio enables the first primary radio to change from the current sleep state to a work state, but causes the first WUR to enter the sleep state. When the first primary radio is in the work state, the first primary radio may communicate with the transmitting device, for example, may receive data transmitted by the transmitting device, or transmit data to the transmitting device.

Optionally, after the first primary radio is woken up, the first primary radio in the work state may further receive a delivery traffic indication map (Delivery traffic indication map, DTIM) beacon frame transmitted by the transmitting device. After the DTIM beacon frame, the transmitting device transmits a broadcast/multicast frame to the receiving device.

Optionally, the first wake-up frame received by the first WUR may further include a time field; and the first WUR determines, based on the time field, a time of waking up the first primary radio. Specifically, the first WUR receives the first wake-up frame, and when the wake-up field in the first wake-up frame instructs the first WUR to wake up the first primary radio, the first WUR may further determine, based on the time field in the first wake-up frame, the time of waking up the first primary radio. For example, the time field may instruct the first WUR to immediately wake up the first primary radio. In this case, after receiving the first wake-up frame, the first WUR wakes up the first primary radio; and the first primary radio wakes up from the sleep state, changes to the work state, and receives data or the DTIM beacon frame transmitted by the transmitting device, but the first WUR enters the sleep state. The time field may further indicate a target time point. In this case, after receiving the first wake-up frame, the first WUR determines the target time point based on the time field, and wakes up the first primary radio at the target time point; and the first primary radio wakes up from the sleep state, changes to the work state, and receives data or the DTIM beacon frame transmitted by the transmitting device, but the first WUR enters the sleep state.

Therefore, in the wake-up method in this embodiment of this application, the transmitting device transmits the wake-up frame to the receiving device, where the wake-up frame includes the WUR identifier field and the wake-up field, the target WUR group is determined based on the WUR identifier field, whether the WUR in the target WUR group needs to perform the wake-up operation is determined based on the wake-up field and a structure of the wake-up frame is relatively short. In addition, the transmitting device periodically transmits the wake-up frame corresponding to the target WUR group, so that the WUR can enter the sleep state when the WUR does not need to receive the wake-up frame, thereby reducing energy consumption of the WUR.

FIG. 9 is a schematic flowchart of a wake-up method 300 according to another embodiment of this application. The method 300 may be applied to a communications system. The communications system includes a transmitting device and at least one receiving device. Each of the at least one receiving device includes a primary radio and a WUR. The communications system may be the communications system 100 shown in FIG. 1. As shown in FIG. 9, the method 300 includes the following steps.

S310. A transmitting device generates a wake-up frame, where the wake-up frame includes a WUR group identifier field, the WUR group identifier field is used to indicate a WUR in a target WUR group, the target WUR group includes m WURs in WURs of at least one receiving device, the wake-up frame is used to instruct each WUR in the target WUR group to perform a wake-up operation, the wake-up operation is waking up, by a first WUR of a first receiving device, a first primary radio of a first receiving device, and the first WUR is any WUR in the target WUR group.

In this embodiment of this application, the transmitting device may group the WURs of the at least one receiving device in a communications system according to a preset condition, and allocate a group identifier to each WUR group, where the preset condition may include at least one of a power consumption requirement, a traffic latency requirement, and a traffic type of each of the at least one receiving device.

For example, the transmitting device may group receiving devices of a same traffic type into one group based on the traffic type of each receiving device, that is, WURs of the receiving devices of the same traffic type belong to a same group. The WURs of the at least one receiving device may be grouped into a plurality of WUR groups, and the transmitting device allocates a group identifier to each WUR group. In this case, the WUR group identifier field in the wake-up frame is used to indicate a group identifier of the target WUR group that needs to be woken up, and the target WUR group may include the m WURs in the WURs of the at least one receiving device.

For another example, the transmitting device may further perform grouping based on different latency requirements of receiving devices, and group receiving devices having similar latency requirements into one group, so that the receiving devices in this group obtain a same latency effect. Specifically, for example, the transmitting device is an AP, and the receiving device is a STA. Because different STAs have different requirements on latencies, energy saving effects, and the like, the AP may group different STAs based on different requirements of the STAs on latencies and power consumption. For example, the transmitting device may group WURs having relatively high requirements on latencies into one group, and in this case, a period of transmitting a wake-up frame to the WURs in this group is relatively short; or the transmitting device may further group WURs having relatively low requirements on latencies into one group, and in this case, a period of transmitting a wake-up frame to the WURs in this group is relatively long. However, this is not limited in this embodiment of this application.

S320. The transmitting device transmits the wake-up frame to the WUR in the target WUR group. For example, the first WUR receives the wake-up frame, where the first WUR is any WUR in the target WUR group.

It should be understood that, the transmitting device may transmit the wake-up frame by broadcast. The receiving device receives the wake-up frame by using the WUR. To be specific, WURs of all receiving devices in the communications system can receive the wake-up frame, and determine, by using the WUR group identifier field in the wake-up frame, whether to perform wake-up operations.

For example, if the first WUR determines that the first WUR belongs to the target WUR group indicated by the WUR group identifier field, the first WUR receives the wake-up frame, determines that the first WUR belongs to the target WUR group, and may continue to perform S330. For a second WUR, if the second WUR determines that the second WUR does not belong to the target WUR group indicated by the WUR group identifier field, the second WUR does not continue to perform S330 after receiving the wake-up frame, and may ignore the wake-up frame.

S330. The first WUR that belongs to the target WUR group indicated by the wake-up frame performs the wake-up operation to wake up the first primary radio.

It should be understood that, the waking up, by the first WUR, the first primary radio enables the primary radio to change from a current sleep state to a work state, but causes the first WUR to enter a sleep state. When the first primary radio is in the work state, the primary radio may communicate with the transmitting device, for example, may receive data transmitted by the transmitting device, or transmit data to the transmitting device, or receive a DTIM frame transmitted by the transmitting device.

Optionally, the wake-up frame may further include a time field, where the time field is used to indicate a time of waking up the corresponding primary radio by the WUR in the target WUR group.

It should be understood that, the operation of waking up the first primary radio by the first WUR in S330 is similar to the operation of waking up the first primary radio by the first WUR in S230. Details are not described again herein.

Therefore, in the wake-up method in this embodiment of this application, the transmitting device transmits the wake-up frame to the receiving device, where the wake-up frame includes the WUR group identifier field, and the WUR group identifier field is used to indicate the target WUR group; and the WUR in the target WUR group wakes the corresponding primary radio based on the wake-up frame. In this way, a wake-up frame of a relatively short structure can be used to wake up a plurality of WURs.

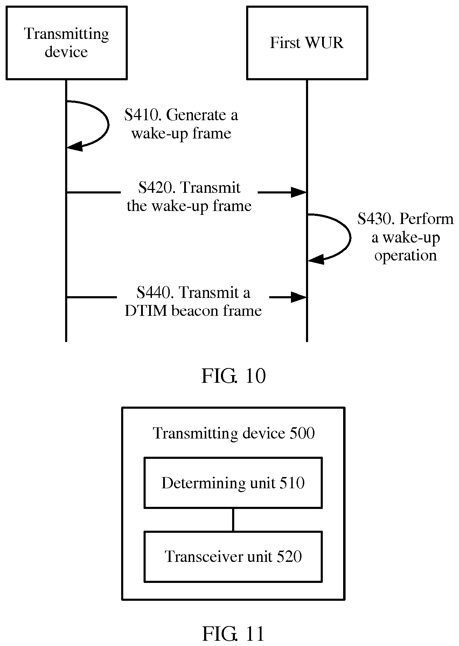

Optionally, in an embodiment, FIG. 10 is a schematic flowchart of a wake-up method 400 according to still another embodiment of this application. The method 400 may be applied to a communications system. The communications system includes a transmitting device and at least one receiving device. Each of the at least one receiving device includes a primary radio and a WUR. The communications system may be the communications system 100 shown in FIG. 1. As shown in FIG. 10, the method 400 includes the following steps.

S410. A transmitting device generates a wake-up frame, where the wake-up frame is used to instruct a WUR of the at least one receiving device to perform a wake-up operation, the wake-up operation includes: waking up, by a first WUR of a first receiving device at a target time point, a first primary radio of the first receiving device to receive a DTIM beacon frame transmitted by the transmitting device, and the first receiving device is any one of the at least one receiving device.

It should be understood that, the transmitting device may transmit a wake-up frame to a plurality of receiving devices, where the wake-up frame is used to instruct at least one of the plurality of receiving devices to receive the wake-up frame and determine, based on the wake-up frame, to perform wake-up operations.

It should be understood that, the wake-up frame is used to instruct the WUR to wake up the primary radio to receive the DTIM beacon frame, where a structure of the wake-up frame may be a structure of any wake-up frame in the wake-up method 100, method 200, and method 300 in the embodiments of this application, or may be another structure of a wake-up frame. This is not limited herein in this embodiment of this application.

S420. The transmitting device transmits the wake-up frame to the WUR of the at least one receiving device.

It should be understood that, the transmitting device generates the wake-up frame for the WUR of the at least one receiving device, and transmits the wake-up frame to the at least one receiving device. For the first WUR of the first receiving device in the at least one receiving device, the first WUR receives the wake-up frame, determines to perform the wake-up operation, and continues to perform S430, where the first receiving device is any one of the at least one receiving device. For a second WUR of a second receiving device that does not belong to the at least one receiving device, the second WUR may also receive the wake-up frame, but the second WUR is a WUR that does not belong to the at least one receiving device indicated by the wake-up frame, and in this case, the second WUR may ignore the wake-up frame without performing any operation.

S430. The WUR of the at least one receiving device performs the wake-up operation based on the wake-up frame, where the wake-up operation includes: waking up, by the first WUR of the first receiving device at the target time point, the first primary radio of the first receiving device to receive the DTIM beacon frame transmitted by the transmitting device, and the first receiving device is any one of the at least one receiving device.

It should be understood that, if the first WUR determines to perform the wake-up operation in S420, the first WUR performs the wake-up operation in S430 to wake up the primary radio at the target time point, so that the primary radio receives the DTIM beacon frame transmitted by the transmitting device.

In this embodiment of this application, the transmitting device transmits the DTIM beacon frame to the receiving device at the target time point. Therefore, the WUR of the receiving device needs to wake up the primary radio at the target time point. Specifically, the first WUR receives the wake-up frame, where the wake-up frame may include a time field, and the first WUR determines the target time point based on the time field, so that the first WUR wakes up the first primary radio at the target time point to receive the DTIM beacon frame.

Optionally, when the target time point indicated by the time field is a time of receiving the wake-up frame by the first WUR, after receiving the wake-up frame, the first WUR immediately wakes up the first primary radio to receive the DTIM beacon frame; or when the time field indicates a target time point after a duration, the first WUR does not immediately wake up the first primary radio when receiving the wake-up frame, but wakes up, at the target time point, the first primary radio to receive the DTIM beacon frame.

Optionally, the wake-up frame may further not include the time field, and the target time point is determined based on a preset time. Specifically, when the wake-up frame does not include the time field, it may indicate that after the first WUR receives the wake-up frame, the first WUR immediately wakes up the first primary radio to receive the DTIM beacon frame, or may indicate that the first WUR wakes up the first primary radio after a preset time to receive the DTIM beacon frame. The preset time may be preset by the transmitting device and the receiving device to be a fixed duration. This is not limited in this embodiment of this application.

S440. The transmitting device transmits the DTIM beacon frame to the first receiving device at the target time point, and specifically, the first primary radio of the first receiving device may receive the DTIM beacon frame.

It should be understood that, if the first WUR wakes up the first primary radio at the target time point, the transmitting device transmits the DTIM beacon frame to the first receiving device at the target time point; and the first primary radio of the first receiving device receives the DTIM beacon frame, but the first WUR sleeps after the target time point until no communication is required between the first receiving device and the transmitting device; then the first primary radio falls in sleep, and the first WUR is woken up.

It should be understood that, after transmitting the DTIM beacon frame, the transmitting device continues to transmit a broadcast/multicast frame to the receiving device; therefore, after being woken up, the primary radio may receive the DTIM frame, and may further receive the subsequent broadcast/multicast frame.

Therefore, in the wake-up method in this embodiment of this application, the wake-up frame is used to wake up the primary radio of the receive end, so that the primary radio receives the DTIM beacon frame when the transmitting device transmits the DTIM beacon frame. This further ensures that the primary radio can receive the subsequent broadcast/multicast frame after the DTIM beacon frame, thereby reducing energy consumption of the receiving device.

It should be understood that sequence numbers of the foregoing processes do not mean execution sequences in various embodiments of this application. The execution sequences of the processes should be determined according to functions and internal logic of the processes, and should not be construed as any limitation on the implementation processes of the embodiments of this application.

The foregoing describes the wake-up methods in detail according to the embodiments of this application with reference to FIG. 1 to FIG. 10. The following describes wake-up apparatuses according to the embodiments of this application with reference to FIG. 11 to FIG. 22.

FIG. 11 is a schematic block diagram of a transmitting device 500 according to an embodiment of this application. The transmitting device 500 may be located in a communications system, for example, in the communications system 100 in FIG. 1. The communications system includes the transmitting device 500 and at least one receiving device, and each of the at least one receiving device includes a WUR and a primary radio. As shown in FIG. 11, the transmitting device 500 includes:
a determining unit 510, configured to generate a first wake-up frame, where the first wake-up frame includes a WUR identifier field and a wake-up field, the WUR identifier field is used to indicate a WUR in a target WUR group, the target WUR group includes n WURs in WURs of the at least one receiving device, the wake-up field is used to indicate whether each WUR in the target WUR group performs a wake-up operation, the wake-up operation is waking up, by a first WUR of a first receiving device, a first primary radio of a first receiving device, the first WUR is any WUR in the target WUR group, and n is a positive integer; and
a transceiver unit 520, configured to transmit the first wake-up frame.

Therefore, the transmitting device in this embodiment of this application generates the wake-up frame and transmits the wake-up frame, where the WUR identifier field in the wake-up frame is used to indicate the target WUR group, and the wake-up field in the wake-up frame is used to indicate whether each WUR in the target WUR group performs the wake-up operation, so that the corresponding primary radio is woken up, thereby reducing energy consumption of the receive end.

Optionally, identifiers of the n WURs are continuous, the WUR identifier field includes start WUR identifier information, and the start WUR identifier information is used to indicate an identifier of a start WUR in the n continuous WURs.

Optionally, the WUR identifier field further includes length information, and the length information is used to indicate a value of n.

Optionally, the WUR identifier field is further used to indicate a group identifier of the target WUR group; and the determining unit is further configured to: before generating the first wake-up frame, group the WURs of the at least one receiving device according to a preset condition, and allocate a WUR group identifier to each WUR group, where the preset condition includes at least one of a power consumption requirement, a traffic latency requirement, and a traffic type of each of the at least one receiving device.

Optionally, the determining unit is further configured to determine a first period value, where the first period value is used to indicate a time interval between a transmit time point of the first wake-up frame and a transmit time point of a subsequent second wake-up frame, and the second wake-up frame is used to indicate whether each WUR in the target WUR group performs the wake-up operation; and the transceiver unit is specifically configured to transmit the second wake-up frame based on the first period value.

Optionally, the first wake-up frame includes a time information field, and the time information field is used to indicate the first period value.

Optionally, the time information field includes period information and quantity information, the period information is used to indicate a period of transmitting a wake-up frame by the transmitting device, and the quantity information is used to indicate a quantity of wake-up frames between the first wake-up frame and the second wake-up frame.

Optionally, the determining unit is specifically configured to: determine at least one period value based on a power consumption requirement and/or a traffic latency requirement of the first receiving device; and determine the first period value, where the first period value is determined by the first receiving device from the at least one period value.

Optionally, the transceiver unit is further configured to: receive request information transmitted by the first receiving device, where the request information is used to request the transmitting device to update a period value for the first receiving device; and transmit a second period value to the first receiving device, where the second period value is used by the first WUR to update a time interval between a receive time point of the first wake-up frame and a receive time point of the second wake-up frame to the second period value; and the determining unit is further configured to update the time interval between the transmit time point of the first wake-up frame and the transmit time point of the second wake-up frame to the second period value.

Optionally, a correspondence exists between the first period value and an identifier of a WUR in the target WUR group, and the determining unit is further configured to: when the first WUR updates the time interval between the transmit time point of the first wake-up frame and the transmit time point of the second wake-up frame to the second period value, update the identifier of the WUR in the target WUR group to a WUR identifier corresponding to the second period value.

Optionally, the wake-up operation includes: waking up, by the first WUR, the first primary radio, so that the first primary radio receives data or a delivery traffic indication map DTIM beacon frame transmitted by the transmitting device.

It should be understood that, the transmitting device 500 according to this embodiment of this application may correspondingly perform the method 200 in the embodiment of this application, and the foregoing and other operations and/or functions of each module in the transmitting device 500 are respectively intended to implement a corresponding procedure of the transmitting device in the method in FIG. 2. For brevity, details are not described herein.

Therefore, the transmitting device in this embodiment of this application generates the wake-up frame and transmits the wake-up frame, where the WUR identifier field in the wake-up frame is used to indicate the target WUR group, and the wake-up field in the wake-up frame is used to indicate whether each WUR in the target WUR group performs the wake-up operation, so that the corresponding primary radio is woken up, thereby reducing energy consumption of the receive end. In addition, the transmitting device may periodically transmit the wake-up frame corresponding to the target WUR group, so that the WUR can enter a sleep state when the WUR does not need to receive the wake-up frame, thereby further reducing energy consumption of the WUR.

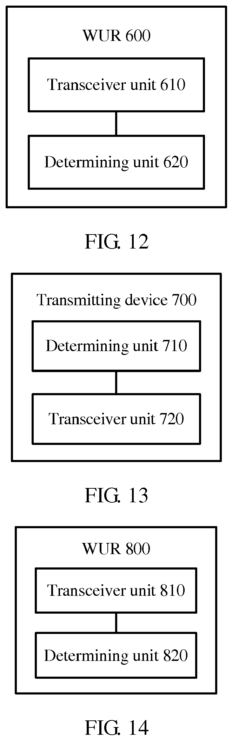

FIG. 12 is a schematic block diagram of a WUR 600 of a receiving device according to an embodiment of this application. The receiving device may be located in a communications system, for example, in the communications system 100 in FIG. 1. The communications system includes a transmitting device and at least one receiving device, the receiving device is any one of the at least one receiving device, and the receiving device includes the WUR 600 and a primary radio. As shown in FIG. 12, the WUR 600 includes:
a transceiver unit 610, configured to receive a first wake-up frame, where the first wake-up frame includes a WUR identifier field and a wake-up field, the WUR identifier field is used to indicate a WUR in a target WUR group, the target WUR group includes n WURs in WURs of the at least one receiving device, the wake-up field is used to indicate whether each WUR in the target WUR group performs a wake-up operation, and n is a positive integer; and
a determining unit 620, configured to determine, based on the WUR identifier field, that the WUR belongs to the target WUR group; where
the determining unit 620 is further configured to determine, based on the wake-up field, whether to perform the wake-up operation, where the wake-up operation is waking up, by the WUR of the receiving device, the primary radio of the receiving device .

Therefore, the WUR in this embodiment of this application receives the wake-up frame transmitted by the transmitting device, determines, by using the WUR identifier field in the wake-up frame, whether the WUR belongs to the target WUR group, and determines, by using the wake-up field in the wake-up frame, whether to perform the wake-up operation to wake up the corresponding primary radio, thereby reducing energy consumption of the receive end.

Optionally, identifiers of the n WURs are continuous, the WUR identifier field includes start WUR identifier information, and the start WUR identifier information is used to indicate an identifier of a start WUR in the n continuous WURs; and the determining unit 620 is specifically configured to determine, based on the start WUR and a value of n, that the WUR belongs to the n WURs.

Optionally, the WUR identifier field further includes length information, and the length information is used to indicate the value of n.

Optionally, the WUR identifier field is further used to indicate a group identifier of the target WUR group; the transceiver unit 610 is further configured to receive a group identifier that is of a group including the WUR and is transmitted by the transmitting device, where the transmitting device is configured to group the WURs of the at least one receiving device according to a preset condition and allocate a WUR group identifier to each WUR group, and the preset condition includes at least one of a power consumption requirement, a traffic latency requirement, and a traffic type of each of the at least one receiving device; and the determining unit 620 is specifically configured to: when the group identifier of the target WUR group is the group identifier of the group including the WUR, determine that the WUR belongs to the target WUR group.

Optionally, the determining unit 620 is further configured to determine a first period value, where the first period value is used to indicate a time interval between a transmit time point of the first wake-up frame and a transmit time point of a subsequent second wake-up frame, and the second wake-up frame is used to indicate whether each WUR in the target WUR group performs the wake-up operation; the transceiver unit 610 is specifically configured to receive the second wake-up frame based on the first period value; and the determining unit 620 is specifically configured to determine, based on the second wake-up frame, whether to wake up the primary radio.

Optionally, the first wake-up frame includes a time information field, and the time information field is used to indicate the first period value.

Optionally, the time information field includes period information and quantity information, the period information is used to indicate a period of transmitting a wake-up frame by the transmitting device, and the quantity information is used to indicate a quantity of wake-up frames between the first wake-up frame and the second wake-up frame.

Optionally, the transceiver unit 610 is specifically configured to receive the first period value transmitted by the primary radio, where the first period value is determined by the primary radio from at least one period value, and the at least one period value is determined by the transmitting device based on a power consumption requirement and/or a traffic latency requirement of the receiving device.

Optionally, the determining unit 620 is specifically configured to update a time interval between a receive time point of the first wake-up frame and a receive time point of the second wake-up frame to a second period value, where the second period value is determined by the transmitting device based on request information transmitted by the receiving device, the request information is used to request the transmitting device to update a period value for the receiving device, and the second period value is used by the transmitting device to update the time interval between the transmit time point of the first wake-up frame and the transmit time point of the second wake-up frame to the second period value.

Optionally, a correspondence exists between the first period value and an identifier of a WUR in the target WUR group, and the determining unit 620 is specifically configured to: when the WUR updates the time interval between the receive time point of the first wake-up frame and the receive time point of the second wake-up frame to the second period value, update the identifier of the WUR to a WUR identifier corresponding to the second period value.

Optionally, the wake-up operation includes: waking up, by the WUR, the primary radio, so that the primary radio receives data or a delivery traffic indication map DTIM beacon frame transmitted by the transmitting device.

It should be understood that, the WUR 600 of the receiving device according to this embodiment of this application may correspondingly perform the method 200 in the embodiment of this application, and the foregoing and other operations and/or functions of each module in the WUR 600 are respectively intended to implement a corresponding procedure of the first WUR in the method in FIG. 2. For brevity, details are not described herein.

Therefore, the WUR in this embodiment of this application receives the wake-up frame transmitted by the transmitting device, determines, by using the WUR identifier field in the wake-up frame, whether the WUR belongs to the target WUR group, and determines, by using the wake-up field in the wake-up frame, whether to perform the wake-up operation to wake up the corresponding primary radio, thereby reducing energy consumption of the receive end. In addition, the transmitting device may periodically transmit the wake-up frame corresponding to the target WUR group, so that the WUR can enter a sleep state when the WUR does not need to receive the wake-up frame, thereby further reducing energy consumption of the WUR.

FIG. 13 is a schematic block diagram of a transmitting device 700 according to an embodiment of this application. The transmitting device 700 may be located in a communications system, for example, in the communications system 100 in FIG. 1. The communications system includes the transmitting device 700 and at least one receiving device, and each of the at least one receiving device includes a WUR and a primary radio. As shown in FIG. 13, the transmitting device 700 includes:
a determining unit 710, configured to generate a wake-up frame, where the wake-up frame includes a WUR group identifier field, the WUR group identifier field is used to indicate a WUR in a target WUR group, the target WUR group includes m WURs in WURs of the at least one receiving device, the wake-up frame is used to instruct each WUR in the target WUR group to perform a wake-up operation, the wake-up operation is waking up, by a first WUR of a first receiving device, a first primary radio of a first receiving device, the first WUR is any WUR in the target WUR group, and m is a positive integer; and
a transceiver unit 720, configured to transmit the wake-up frame.

Therefore, the transmitting device in this embodiment of this application generates and transmits the wake-up frame to the receiving device, where the wake-up frame includes the WUR group identifier field, and the WUR group identifier field may be used to instruct the WURs in the same group to perform wake-up operations.

Optionally, the determining unit 710 is further configured to: determine a power consumption requirement and/or a traffic latency requirement of each of the at least one receiving device; and group the WURs of the at least one receiving device based on the power consumption requirement and/or the traffic latency requirement of each receiving device, and allocate a WUR group identifier to each WUR group.

Optionally, the wake-up operation includes: waking up, by the first WUR, the first primary radio, so that the first primary radio receives data or a delivery traffic indication map DTIM beacon frame transmitted by the transmitting device.

It should be understood that, the transmitting device 700 according to this embodiment of this application may correspondingly perform the method 300 in the embodiment of this application, and the foregoing and other operations and/or functions of each module in the transmitting device 700 are respectively intended to implement a corresponding procedure of the transmitting device in the method in FIG. 9. For brevity, details are not described herein.

Therefore, the transmitting device in this embodiment of this application generates and transmits the wake-up frame to the receiving device, where the wake-up frame includes the WUR group identifier field, and the WUR group identifier field may be used to instruct the WURs in the same group to perform wake-up operations.

FIG. 14 is a schematic block diagram of a WUR 800 of a receiving device according to an embodiment of this application. The receiving device may be located in a communications system, for example, in the communications system 100 in FIG. 1. The communications system includes a transmitting device and at least one receiving device, the receiving device is any one of the at least one receiving device, and the receiving device includes the WUR 800 and a primary radio. As shown in FIG. 14, the WUR 800 includes:
a transceiver unit 810, configured to receive a wake-up frame, where the wake-up frame includes a WUR group identifier field, the WUR group identifier field is used to indicate a WUR in a target WUR group, the target WUR group includes m WURs in WURs of the at least one receiving device, the wake-up frame is used to instruct each WUR in the target WUR group to perform a wake-up operation, and m is a positive integer; and
a determining unit 820, configured to perform the wake-up operation after determining, based on the WUR group identifier field, that the WUR belongs to the target WUR group, where the wake-up operation is waking up, by the WUR of the receiving device, the primary radio of the receiving device .

Therefore, the WUR in this embodiment of this application receives the wake-up frame transmitted by the transmitting device, where the wake-up frame includes the WUR group identifier field, and the WUR may determine, by using the WUR group identifier field, whether the WUR belongs to the WUR group, and therefore perform the wake-up operation when the WUR belongs to the WUR group or not perform the wake-up operation when the WUR does not belong to the WUR group.

Optionally, the transceiver unit 810 is further configured to receive a group identifier that is of a group including the WUR and is transmitted by the transmitting device, where the transmitting device is configured to group the WURs of the at least one receiving device according to a preset condition and allocate a WUR group identifier to each WUR group, and the preset condition includes at least one of a power consumption requirement, a traffic latency requirement, and a traffic type of each of the at least one receiving device; and the determining unit 820 is specifically configured to: when a group identifier of the target WUR group is the group identifier of the group including the WUR, determine that the WUR belongs to the target WUR group.

Optionally, the wake-up operation includes: waking up, by the WUR, the primary radio, so that the primary radio receives data or a delivery traffic indication map DTIM beacon frame transmitted by the transmitting device.

It should be understood that, the WUR 800 of the receiving device according to this embodiment of this application may correspondingly perform the method 300 in the embodiment of this application, and the foregoing and other operations and/or functions of each module in the WUR 800 are respectively intended to implement a corresponding procedure of the first WUR in the method in FIG. 9. For brevity, details are not described herein.

Therefore, the WUR in this embodiment of this application receives the wake-up frame transmitted by the transmitting device, where the wake-up frame includes the WUR group identifier field, and the first WUR may determine, by using the WUR group identifier field, whether the first WUR belongs to the WUR group, and therefore perform the wake-up operation when the first WUR belongs to the WUR group or not perform the wake-up operation when the first WUR does not belong to the WUR group.

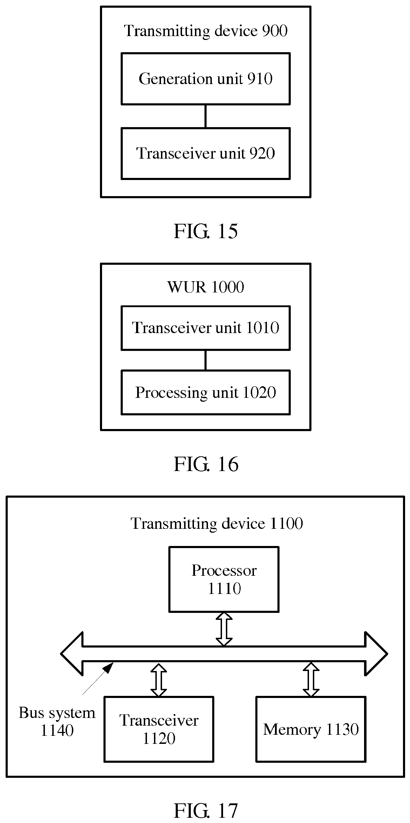

FIG. 15 is a schematic block diagram of a transmitting device 900 according to an embodiment of this application. The transmitting device 900 may be located in a communications system, for example, in the communications system 100 in FIG. 1. The communications system includes the transmitting device 900 and at least one receiving device, and each of the at least one receiving device includes a WUR and a primary radio. As shown in FIG. 15, the transmitting device 900 includes:
a generation unit 910, configured to generate a wake-up frame, where the wake-up frame is used to instruct a WUR of the at least one receiving device to perform a wake-up operation, the wake-up operation is waking up, by a first WUR of a first receiving device at a target time point, a first primary radio of the first receiving device to receive a delivery traffic indication map DTIM beacon frame, and the first receiving device is any one of the at least one receiving device; and
a transceiver unit 920, configured to transmit the wake-up frame.

Therefore, the transmitting device in this embodiment of this application transmits the wake-up frame, so that the WUR wakes up the primary radio at the target time point to receive the DTIM beacon frame and receive a broadcast/multicast frame transmitted by the transmitting device after the transmitting device transmits the DTIM beacon frame, thereby reducing energy consumption of the receiving device.

Optionally, the wake-up frame includes a time field, and the time field is used to indicate the target time point.

It should be understood that, the transmitting device 900 according to this embodiment of this application may correspondingly perform the method 400 in the embodiment of this application, and the foregoing and other operations and/or functions of each module in the transmitting device 900 are respectively intended to implement a corresponding procedure of the transmitting device in the method in FIG. 10. For brevity, details are not described herein.

Therefore, the transmitting device in this embodiment of this application transmits the wake-up frame, so that the WUR wakes up the primary radio at the target time point to receive the DTIM beacon frame and receive a broadcast/multicast frame transmitted by the transmitting device after the transmitting device transmits the DTIM beacon frame, thereby reducing energy consumption of the receiving device.

FIG. 16 is a schematic block diagram of a WUR 1000 of a receiving device according to an embodiment of this application. The receiving device may be located in a communications system, for example, in the communications system 100 in FIG. 1. The communications system includes a transmitting device and at least one receiving device, the receiving device is any one of the at least one receiving device, and the receiving device includes the WUR 1000 and a primary radio. As shown in FIG. 16, the WUR 1000 includes:
a transceiver unit 1010, configured to receive a wake-up frame, where the wake-up frame is used to instruct a WUR of the at least one receiving device to perform a wake-up operation; and
a processing unit 1020, configured to perform the wake-up operation based on the wake-up frame, where the wake-up operation is waking up, by the WUR at a target time point, the primary radio of the receiving device to receive a delivery traffic indication map DTIM beacon frame.

Therefore, the WUR in this embodiment of this application wakes up, at the target time point based on the wake-up frame transmitted by the transmitting device, the primary radio to receive the DTIM beacon frame transmitted by the transmitting device. Because the transmitting device transmits a broadcast/multicast frame after transmitting the DTIM beacon frame, the primary radio may further receive the broadcast/multicast frame after the DTIM beacon frame, thereby reducing energy consumption of the receiving device.

Optionally, the wake-up frame includes a time field, and the time field is used to indicate the target time point.

It should be understood that, the WUR 1000 of the receiving device according to this embodiment of this application may correspondingly perform the method 400 in the embodiment of this application, and the foregoing and other operations and/or functions of each module in the WUR 1000 are respectively intended to implement a corresponding procedure of the first WUR in the method in FIG. 10. For brevity, details are not described herein.

Therefore, the WUR in this embodiment of this application wakes up, at the target time point based on the wake-up frame transmitted by the transmitting device, the primary radio to receive the DTIM beacon frame transmitted by the transmitting device. Because the transmitting device transmits a broadcast/multicast frame after transmitting the DTIM beacon frame, the first primary radio may further receive the broadcast/multicast frame after the DTIM beacon frame, thereby reducing energy consumption of the receiving device.

FIG. 17 is a schematic block diagram of a transmitting device 1100 according to an embodiment of this application. The transmitting device 1100 may be located in a communications system, for example, in the communications system 100 in FIG. 1. The communications system includes the transmitting device 1100 and at least one receiving device, and each of the at least one receiving device includes a WUR and a primary radio. As shown in FIG. 17, the transmitting device 1100 includes a processor 1110 and a transceiver 1120. The processor 1110 is connected to the transceiver 1120. Optionally, the transmitting device 1100 further includes a memory 1130, and the memory 1130 is connected to the processor 1110. Further optionally, the transmitting device 1100 includes a bus system 1140. The processor 1110, the memory 1130, and the transceiver 1120 may be connected by the bus system 1140. The memory 1130 may be configured to store an instruction. The processor 1110 is configured to execute the instruction stored in the memory 1130, so as to control the transceiver 1120 to transmit information or a signal.

The processor 1110 is configured to generate a first wake-up frame, where the first wake-up frame includes a WUR identifier field and a wake-up field, the WUR identifier field is used to indicate a WUR in a target WUR group, the target WUR group includes n WURs in WURs of the at least one receiving device, the wake-up field is used to indicate whether each WUR in the target WUR group performs a wake-up operation, the wake-up operation is waking up, by a first WUR of a first receiving device, a first primary radio of a first receiving device, the first WUR is any WUR in the target WUR group, and n is a positive integer; and the transceiver 1120 is configured to transmit the first wake-up frame.

Therefore, the transmitting device in this embodiment of this application generates the wake-up frame and transmits the wake-up frame, where the WUR identifier field in the wake-up frame is used to indicate the target WUR group, and the wake-up field in the wake-up frame is used to indicate whether each WUR in the target WUR group performs the wake-up operation, so that the corresponding primary radio is woken up, thereby reducing energy consumption of the receive end.

Optionally, identifiers of the n WURs are continuous, the WUR identifier field includes start WUR identifier information, and the start WUR identifier information is used to indicate an identifier of a start WUR in the n continuous WURs.

Optionally, the WUR identifier field further includes length information, and the length information is used to indicate a value of n.

Optionally, the WUR identifier field is further used to indicate a group identifier of the target WUR group; and the processor 1110 is further configured to: before generating the first wake-up frame, group the WURs of the at least one receiving device according to a preset condition, and allocate a WUR group identifier to each WUR group, where the preset condition includes at least one of a power consumption requirement, a traffic latency requirement, and a traffic type of each of the at least one receiving device.

Optionally, the processor 1110 is further configured to determine a first period value, where the first period value is used to indicate a time interval between a transmit time point of the first wake-up frame and a transmit time point of a subsequent second wake-up frame, and the second wake-up frame is used to indicate whether each WUR in the target WUR group performs the wake-up operation; and the transceiver 1120 is specifically configured to transmit the second wake-up frame based on the first period value.

Optionally, the first wake-up frame includes a time information field, and the time information field is used to indicate the first period value.

Optionally, the time information field includes period information and quantity information, the period information is used to indicate a period of transmitting a wake-up frame by the transmitting device, and the quantity information is used to indicate a quantity of wake-up frames between the first wake-up frame and the second wake-up frame.

Optionally, the processor 1110 is specifically configured to: determine at least one period value based on a power consumption requirement and/or a traffic latency requirement of the first receiving device; and determine the first period value, where the first period value is determined by the first receiving device from the at least one period value.

Optionally, the transceiver 1120 is further configured to: receive request information transmitted by the first receiving device, where the request information is used to request the transmitting device to update a period value for the first receiving device; and transmit a second period value to the first receiving device, where the second period value is used by the first WUR to update a time interval between a receive time point of the first wake-up frame and a receive time point of the second wake-up frame to the second period value; and the processor 1110 is further configured to update the time interval between the transmit time point of the first wake-up frame and the transmit time point of the second wake-up frame to the second period value.

Optionally, a correspondence exists between the first period value and an identifier of a WUR in the target WUR group, and the processor 1110 is further configured to: when the first WUR updates the time interval between the transmit time point of the first wake-up frame and the transmit time point of the second wake-up frame to the second period value, update the identifier of the WUR in the target WUR group to a WUR identifier corresponding to the second period value.

Optionally, the wake-up operation includes: waking up, by the first WUR, the first primary radio, so that the first primary radio receives data or a delivery traffic indication map DTIM beacon frame transmitted by the transmitting device.

It should be understood that, the transmitting device 1100 according to this embodiment of this application may correspond to the transmitting device 500 in the embodiment of this application, and may correspond to an entity performing the method 200 in the embodiment of this application, and the foregoing and other operations and/or functions of each module in the transmitting device 1100 are respectively intended to implement a corresponding procedure of the transmitting device in the method in FIG. 2. For brevity, details are not described herein.

Therefore, the transmitting device in this embodiment of this application generates the wake-up frame and transmits the wake-up frame, where the WUR identifier field in the wake-up frame is used to indicate the target WUR group, and the wake-up field in the wake-up frame is used to indicate whether each WUR in the target WUR group performs the wake-up operation, so that the corresponding primary radio is woken up, thereby reducing energy consumption of the receive end. In addition, the transmitting device may periodically transmit the wake-up frame corresponding to the target WUR group, so that the WUR can enter a sleep state when the WUR does not need to receive the wake-up frame, thereby further reducing energy consumption of the WUR.

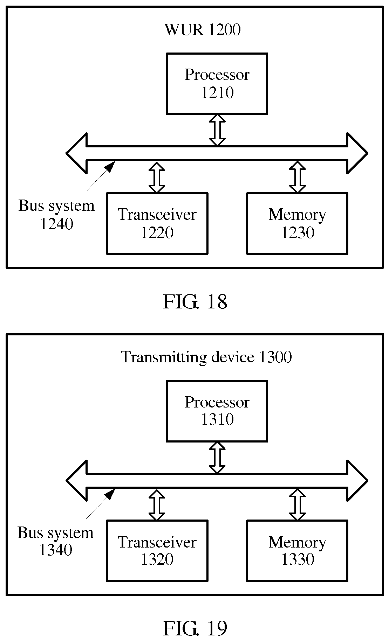

FIG. 18 is a schematic block diagram of a WUR 1200 of a receiving device according to an embodiment of this application. The receiving device may be located in a communications system, for example, in the communications system 100 in FIG. 1. The communications system includes a transmitting device and at least one receiving device, the receiving device is any one of the at least one receiving device, and the receiving device includes the WUR 1200 and a primary radio. As shown in FIG. 18, the WUR 1200 includes a processor 1210 and a transceiver 1220. The processor 1210 is connected to the transceiver 1220. Optionally, the WUR 1200 further includes a memory 1230, and the memory 1230 is connected to the processor 1210. Further optionally, the WUR 1200 includes a bus system 1240. The processor 1210, the memory 1230, and the transceiver 1220 may be connected by the bus system 1240. The memory 1230 may be configured to store an instruction. The processor 1210 is configured to execute the instruction stored in the memory 1230, so as to control the transceiver 1220 to transmit information or a signal.

The transceiver 1220 is configured to receive a first wake-up frame, where the first wake-up frame includes a WUR identifier field and a wake-up field, the WUR identifier field is used to indicate a WUR in a target WUR group, the target WUR group includes n WURs in WURs of the at least one receiving device, the wake-up field is used to indicate whether each WUR in the target WUR group performs a wake-up operation, and n is a positive integer; the processor 1210 is configured to determine, based on the WUR identifier field, that the WUR belongs to the target WUR group; and the processor 1210 is further configured to determine, based on the wake-up field, whether to perform the wake-up operation, where the wake-up operation is waking up, by the WUR of the receiving device, the primary radio of the receiving device .

Therefore, the WUR in this embodiment of this application receives the wake-up frame transmitted by the transmitting device, determines, by using the WUR identifier field in the wake-up frame, whether the WUR belongs to the target WUR group, and determines, by using the wake-up field in the wake-up frame, whether to perform the wake-up operation to wake up the corresponding primary radio, thereby reducing energy consumption of the receive end.

Optionally, identifiers of the n WURs are continuous, the WUR identifier field includes start WUR identifier information, and the start WUR identifier information is used to indicate an identifier of a start WUR in the n continuous WURs; and the processor 1210 is specifically configured to determine, based on the start WUR and a value of n, that the WUR belongs to the n WURs.

Optionally, the WUR identifier field further includes length information, and the length information is used to indicate the value of n.

Optionally, the WUR identifier field is further used to indicate a group identifier of the target WUR group; the transceiver 1220 is further configured to receive a group identifier that is of a group including the WUR and is transmitted by the transmitting device, where the transmitting device is configured to group the WURs of the at least one receiving device according to a preset condition and allocate a WUR group identifier to each WUR group, and the preset condition includes at least one of a power consumption requirement, a traffic latency requirement, and a traffic type of each of the at least one receiving device; and the processor 1210 is specifically configured to: when the group identifier of the target WUR group is the group identifier of the group including the WUR, determine that the WUR belongs to the target WUR group.

Optionally, the processor 1210 is further configured to determine a first period value, where the first period value is used to indicate a time interval between a transmit time point of the first wake-up frame and a transmit time point of a subsequent second wake-up frame, and the second wake-up frame is used to indicate whether each WUR in the target WUR group performs the wake-up operation; the transceiver 1220 is specifically configured to receive the second wake-up frame based on the first period value; and the processor 1210 is specifically configured to determine, based on the second wake-up frame, whether to wake up the primary radio.

Optionally, the first wake-up frame includes a time information field, and the time information field is used to indicate the first period value.

Optionally, the time information field includes period information and quantity information, the period information is used to indicate a period of transmitting a wake-up frame by the transmitting device, and the quantity information is used to indicate a quantity of wake-up frames between the first wake-up frame and the second wake-up frame.

Optionally, the transceiver 1220 is specifically configured to receive the first period value transmitted by the primary radio, where the first period value is determined by the primary radio from at least one period value, and the at least one period value is determined by the transmitting device based on a power consumption requirement and/or a traffic latency requirement of the receiving device.

Optionally, the processor 1210 is specifically configured to update a time interval between a receive time point of the first wake-up frame and a receive time point of the second wake-up frame to a second period value, where the second period value is determined by the transmitting device based on request information transmitted by the receiving device, the request information is used to request the transmitting device to update a period value for the receiving device, and the second period value is used by the transmitting device to update the time interval between the transmit time point of the first wake-up frame and the transmit time point of the second wake-up frame to the second period value.

Optionally, a correspondence exists between the first period value and an identifier of a WUR in the target WUR group, and the processor 1210 is specifically configured to: when the WUR updates the time interval between the receive time point of the first wake-up frame and the receive time point of the second wake-up frame to the second period value, update the identifier of the WUR to a WUR identifier corresponding to the second period value.

Optionally, the wake-up operation includes: waking up, by the WUR, the primary radio, so that the primary radio receives data or a delivery traffic indication map DTIM beacon frame transmitted by the transmitting device.

It should be understood that, the WUR 1200 of the receiving device according to this embodiment of this application may correspond to the WUR 600 in the embodiment of this application, and may correspond to a corresponding entity performing the method 200 in the embodiment of this application, and the foregoing and other operations and/or functions of each module in the WUR 1200 are respectively intended to implement a corresponding procedure of the first WUR in the method in FIG. 2. For brevity, details are not described herein.

Therefore, the WUR in this embodiment of this application receives the wake-up frame transmitted by the transmitting device, determines, by using the WUR identifier field in the wake-up frame, whether the WUR belongs to the target WUR group, and determines, by using the wake-up field in the wake-up frame, whether to perform the wake-up operation to wake up the corresponding primary radio, thereby reducing energy consumption of the receive end. In addition, the transmitting device may periodically transmit the wake-up frame corresponding to the target WUR group, so that the WUR can enter a sleep state when the WUR does not need to receive the wake-up frame, thereby further reducing energy consumption of the WUR.

FIG. 19 is a schematic block diagram of a transmitting device 1300 according to an embodiment of this application. The transmitting device 1300 may be located in a communications system, for example, in the communications system 100 in FIG. 1. The communications system includes the transmitting device 1300 and at least one receiving device, and each of the at least one receiving device includes a WUR and a primary radio. As shown in FIG. 19, the transmitting device 1300 includes a processor 1310 and a transceiver 1320. The processor 1310 is connected to the transceiver 1320. Optionally, the transmitting device 1300 further includes a memory 1330, and the memory 1330 is connected to the processor 1310. Further optionally, the transmitting device 1300 includes a bus system 1340. The processor 1310, the memory 1330, and the transceiver 1320 may be connected by the bus system 1340. The memory 1330 may be configured to store an instruction. The processor 1310 is configured to execute the instruction stored in the memory 1330, so as to control the transceiver 1320 to transmit information or a signal.

The processor 1310 is configured to generate a wake-up frame, where the wake-up frame includes a WUR group identifier field, the WUR group identifier field is used to indicate a WUR in a target WUR group, the target WUR group includes m WURs in WURs of the at least one receiving device, the wake-up frame is used to instruct each WUR in the target WUR group to perform a wake-up operation, the wake-up operation is waking up, by a first WUR, a first primary radio of a first receiving device in which the first WUR is located, the first WUR is any WUR in the target WUR group, and m is a positive integer; and the transceiver 1320 is configured to transmit the wake-up frame.

Therefore, the transmitting device in this embodiment of this application generates and transmits the wake-up frame to the receiving device, where the wake-up frame includes the WUR group identifier field, and the WUR group identifier field may be used to instruct the WURs in the same group to perform wake-up operations.

Optionally, the processor 1310 is further configured to: determine a power consumption requirement and/or a traffic latency requirement of each of the at least one receiving device; and group the WURs of the at least one receiving device based on the power consumption requirement and/or the traffic latency requirement of each receiving device, and allocate a WUR group identifier to each WUR group.

Optionally, the wake-up operation includes: waking up, by the first WUR, the first primary radio, so that the first primary radio receives data or a delivery traffic indication map DTIM beacon frame transmitted by the transmitting device.

It should be understood that, the transmitting device 1300 according to this embodiment of this application may correspond to the transmitting device 700 in the embodiment of this application, and may correspond to a corresponding entity performing the method 300 in the embodiment of this application, and the foregoing and other operations and/or functions of each module in the transmitting device 1300 are respectively intended to implement a corresponding procedure of the initiating device in the method in FIG. 9. For brevity, details are not described herein.

Therefore, the transmitting device in this embodiment of this application generates and transmits the wake-up frame to the receiving device, where the wake-up frame includes the WUR group identifier field, and the WUR group identifier field may be used to instruct the WURs in the same group to perform wake-up operations.

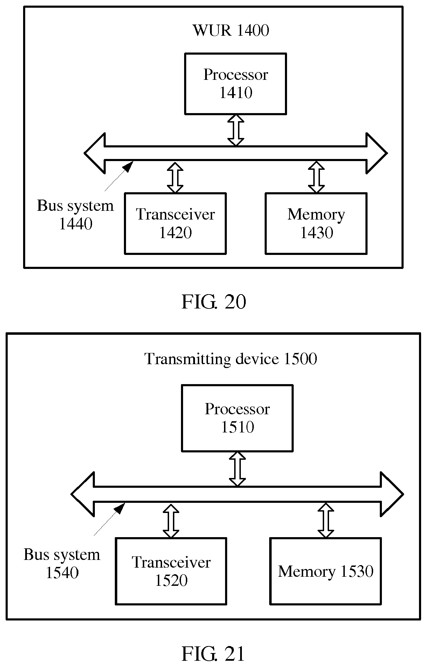

FIG. 20 is a schematic block diagram of a WUR 1400 of a receiving device according to an embodiment of this application. The receiving device may be located in a communications system, for example, in the communications system 100 in FIG. 1. The communications system includes a transmitting device and at least one receiving device, the receiving device is any one of the at least one receiving device, and the receiving device includes the WUR 1400 and a primary radio. As shown in FIG. 20, the WUR 1400 includes a processor 1410 and a transceiver 1420. The processor 1410 is connected to the transceiver 1420. Optionally, the WUR 1400 further includes a memory 1430, and the memory 1430 is connected to the processor 1410. Further optionally, the WUR 1400 includes a bus system 1440. The processor 1410, the memory 1430, and the transceiver 1420 may be connected by the bus system 1440. The memory 1430 may be configured to store an instruction. The processor 1410 is configured to execute the instruction stored in the memory 1430, so as to control the transceiver 1420 to transmit information or a signal.

The transceiver 1420 is configured to receive a wake-up frame, where the wake-up frame includes a WUR group identifier field, the WUR group identifier field is used to indicate a WUR in a target WUR group, the target WUR group includes m WURs in WURs of the at least one receiving device, the wake-up frame is used to instruct each WUR in the target WUR group to perform a wake-up operation, and m is a positive integer; and the processor 1410 is configured to perform the wake-up operation after determining, based on the WUR group identifier field, that the WUR belongs to the target WUR group, where the wake-up operation is waking up, by the WUR of the receiving device, the primary radio of the receiving device .

Therefore, the WUR in this embodiment of this application receives the wake-up frame transmitted by the transmitting device, where the wake-up frame includes the WUR group identifier field, and the first WUR may determine, by using the WUR group identifier field, whether the first WUR belongs to the WUR group, and therefore perform the wake-up operation when the first WUR belongs to the WUR group or not perform the wake-up operation when the first WUR does not belong to the WUR group.

Optionally, the transceiver 1420 is further configured to receive a group identifier that is of a group including the WUR and is transmitted by the transmitting device, where the transmitting device is configured to group the WURs of the at least one receiving device according to a preset condition and allocate a WUR group identifier to each WUR group, and the preset condition includes at least one of a power consumption requirement, a traffic latency requirement, and a traffic type of each of the at least one receiving device; and the processor 1410 is specifically configured to: when a group identifier of the target WUR group is the group identifier of the group including the WUR, determine that the WUR belongs to the target WUR group.

Optionally, the wake-up operation includes: waking up, by the WUR, the primary radio, so that the primary radio receives data or a delivery traffic indication map DTIM beacon frame transmitted by the transmitting device.

It should be understood that, the WUR 1400 of the receiving device according to this embodiment of this application may correspond to the WUR 800 in the embodiment of this application, and may correspond to a corresponding entity performing the method 300 in the embodiment of this application, and the foregoing and other operations and/or functions of each module in the WUR 1400 are respectively intended to implement a corresponding procedure of the first WUR in the method in FIG. 9. For brevity, details are not described herein.

Therefore, the WUR in this embodiment of this application receives the wake-up frame transmitted by the transmitting device, where the wake-up frame includes the WUR group identifier field, and the first WUR may determine, by using the WUR group identifier field, whether the first WUR belongs to the WUR group, and therefore perform the wake-up operation when the first WUR belongs to the WUR group or not perform the wake-up operation when the first WUR does not belong to the WUR group.

FIG. 21 is a schematic block diagram of a transmitting device 1500 according to an embodiment of this application. The transmitting device 1500 may be located in a communications system, for example, in the communications system 100 in FIG. 1. The communications system includes the transmitting device 1500 and at least one receiving device, and each of the at least one receiving device includes a WUR and a primary radio. As shown in FIG. 21, the transmitting device 1500 includes a processor 1510 and a transceiver 1520. The processor 1510 is connected to the transceiver 1520. Optionally, the transmitting device 1500 further includes a memory 1530, and the memory 1530 is connected to the processor 1510. Further optionally, the transmitting device 1500 includes a bus system 1540. The processor 1510, the memory 1530, and the transceiver 1520 may be connected by the bus system 1540. The memory 1530 may be configured to store an instruction. The processor 1510 is configured to execute the instruction stored in the memory 1530, so as to control the transceiver 1520 to transmit information or a signal.

The processor 1510 is configured to generate a wake-up frame, where the wake-up frame is used to instruct a WUR of the at least one receiving device to perform a wake-up operation, the wake-up operation is waking up, by a first WUR of a first receiving device at a target time point, a first primary radio of the first receiving device to receive a delivery traffic indication map DTIM beacon frame, and the first receiving device is any one of the at least one receiving device; and the transceiver 1520 is configured to transmit the wake-up frame.

Therefore, the transmitting device in this embodiment of this application transmits the wake-up frame, so that the WUR wakes up the primary radio at the target time point to receive the DTIM beacon frame and receive a broadcast/multicast frame transmitted by the transmitting device after the transmitting device transmits the DTIM beacon frame, thereby reducing energy consumption of the receiving device.

Optionally, the wake-up frame includes a time field, and the time field is used to indicate the target time point.

It should be understood that, the transmitting device 1500 according to this embodiment of this application may correspond to the transmitting device 900 in the embodiment of this application, and may correspond to a corresponding entity performing the method 400 in the embodiment of this application, and the foregoing and other operations and/or functions of each module in the transmitting device 1500 are respectively intended to implement a corresponding procedure of the initiating device in the method in FIG. 10. For brevity, details are not described herein.

Therefore, the transmitting device in this embodiment of this application transmits the wake-up frame, so that the WUR wakes up the primary radio at the target time point to receive the DTIM beacon frame and receive a broadcast/multicast frame transmitted by the transmitting device after the transmitting device transmits the DTIM beacon frame, thereby reducing energy consumption of the receiving device.

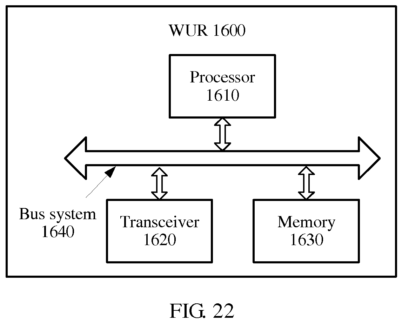

FIG. 22 is a schematic block diagram of a WUR 1600 of a receiving device according to an embodiment of this application. The receiving device may be located in a communications system, for example, in the communications system 100 in FIG. 1. The communications system includes a transmitting device and at least one receiving device, the receiving device is any one of the at least one receiving device, and the receiving device includes the WUR 1600 and a primary radio. As shown in FIG. 22, the WUR 1600 includes a processor 1610 and a transceiver 1620. The processor 1610 is connected to the transceiver 1620. Optionally, the WUR 1600 further includes a memory 1630, and the memory 1630 is connected to the processor 1610. Further optionally, the WUR 1600 includes a bus system 1640. The processor 1610, the memory 1630, and the transceiver 1620 may be connected by the bus system 1640. The memory 1630 may be configured to store an instruction. The processor 1610 is configured to execute the instruction stored in the memory 1630, so as to control the transceiver 1620 to transmit information or a signal.

The transceiver 1620 is configured to receive a wake-up frame, where the wake-up frame is used to instruct a WUR of the at least one receiving device to perform a wake-up operation; and the processor 1610 is configured to perform the wake-up operation based on the wake-up frame, where the wake-up operation is waking up, by the WUR at a target time point, the primary radio of the receiving device to receive a delivery traffic indication map DTIM beacon frame.

Therefore, the WUR in this embodiment of this application wakes up, at the target time point based on the wake-up frame transmitted by the transmitting device, the primary radio to receive the DTIM beacon frame transmitted by the transmitting device. Because the transmitting device transmits a broadcast/multicast frame after transmitting the DTIM beacon frame, the first primary radio may further receive the broadcast/multicast frame after the DTIM beacon frame, thereby reducing energy consumption of the receiving device.

Optionally, the wake-up frame includes a time field, and the time field is used to indicate the target time point.

It should be understood that, the WUR 1600 of the receiving device according to this embodiment of this application may correspond to the WUR 1000 in the embodiment of this application, and may correspond to a corresponding entity performing the method 400 in the embodiment of this application, and the foregoing and other operations and/or functions of each module in the WUR 1600 are respectively intended to implement a corresponding procedure of the first WUR in the method in FIG. 10. For brevity, details are not described herein.

Therefore, the WUR in this embodiment of this application wakes up, at the target time point based on the wake-up frame transmitted by the transmitting device, the primary radio to receive the DTIM beacon frame transmitted by the transmitting device. Because the transmitting device transmits a broadcast/multicast frame after transmitting the DTIM beacon frame, the first primary radio may further receive the broadcast/multicast frame after the DTIM beacon frame, thereby reducing energy consumption of the receiving device.

It should be noted that the foregoing method embodiments of this application may be applied to a processor, or may be implemented by a processor. The processor may be an integrated circuit chip and has a signal processing capability. In an implementation process, steps in the foregoing method embodiments can be implemented by using a hardware integrated logical circuit in the processor, or by using instructions in a form of software. The processor may further be a general processor, a digital signal processor (Digital Signal Processor, DSP), an application-specific integrated circuit (Application-Specific Integrated Circuit, ASIC), a field programmable gate array (Field Programmable Gate Array, FPGA), another programmable logic device, a discrete gate, a transistor logic device, or a discrete hardware component. All methods, steps, and logical block diagrams disclosed in the embodiments of this application may be implemented or performed. The general purpose processor may be a microprocessor or the processor may be any legacy processor, or the like. Steps of the methods disclosed in the embodiments of this application may be directly performed and completed by a hardware decoding processor, or may be performed and completed by using a combination of hardware and software modules in the decoding processor. The software module may be located in a mature storage medium in the field, such as a random access memory, a flash memory, a read-only memory, a programmable read-only memory, an electrically-erasable programmable memory, or a register. The storage medium is located in the memory, and the processor reads information in the memory and completes the steps in the foregoing methods in combination with hardware of the processor.

It may be understood that, the memory in the embodiments of this application may be a volatile memory or a nonvolatile memory, or may include a volatile memory and a nonvolatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. For example but not for limitation, many forms of RAMs are available, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that the memory in the system and method described in this specification aims to include but is not limited to these memories and any memory of another proper type.

It should be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

A person of ordinary skill in the art may be aware that, the units and algorithm steps in the examples described with reference to the embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the system, apparatus, and unit, refer to a corresponding process in the method embodiments. Details are not described herein again.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of this application may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in the embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

## Claims

1. A wake-up method, wherein the method is applied to a communications system, the communications system comprises a transmitting device and at least one receiving device, each of the at least one receiving device comprises a wake-up radio WUR and a primary radio, and the method comprises:
generating (S210, S310, S410), by the transmitting device, a first wake-up frame, wherein the first wake-up frame comprises a WUR identifier field and a wake-up field, the WUR identifier field is used to indicate a WUR in a target WUR group, the target WUR group comprises n WURs of the at least one receiving device, the wake-up field is used to indicate whether each WUR in the target WUR group performs a wake-up operation, the wake-up operation is waking up, by a first WUR of a first receiving device, a first primary radio of the first receiving device, the first WUR is any WUR in the target WUR group, and n is a positive integer; and
transmitting (S220, S320, S420), by the transmitting device, the first wake-up frame,
**characterized in that**
the first wake-up frame comprises a time information field, and the time information field is used to indicate a first period value,
wherein the first period value is used to indicate a time interval between a transmit time point of the first wake-up frame and a transmit time point of a subsequent second wake-up frame, and the second wake-up frame is used to indicate whether each WUR in the target WUR group performs the wake-up operation; and the method further comprises:
transmitting, by the transmitting device, the second wake-up frame based on the first period value.

2. The method according to claim 1, wherein the time information field comprises period information and quantity information, the period information is used to indicate a period of transmitting a wake-up frame by the transmitting device, and the quantity information is used to indicate a quantity of wake-up frames between the first wake-up frame and the second wake-up frame.

3. The method according to claim 2, wherein the method further comprises:
receiving, by the transmitting device, request information transmitted by the first receiving device, wherein the request information is used to request the transmitting device to update a period value for the first receiving device;
transmitting, by the transmitting device, a second period value to the first receiving device, wherein the second period value is used by the first WUR to update a time interval between a receive time point of the first wake-up frame and a receive time point of the second wake-up frame to the second period value; and
updating, by the transmitting device, the time interval between the transmit time point of the first wake-up frame and the transmit time point of the second wake-up frame to the second period value.

4. A wake-up method, wherein the method is applied to a communications system, the communications system comprises a transmitting device and at least one receiving device, each of the at least one receiving device comprises a wake-up radio WUR and a primary radio, and the method comprises:
receiving (S220), by a first WUR, a first wake-up frame, wherein the first wake-up frame comprises a WUR identifier field and a wake-up field, the WUR identifier field is used to indicate a WUR in a target WUR group, the target WUR group comprises n WURs of the at least one receiving device, the wake-up field is used to indicate whether each WUR in the target WUR group performs a wake-up operation, the first WUR is any one of the WURs of the at least one receiving device, and n is a positive integer;
determining, by the first WUR based on the WUR identifier field, that the first WUR belongs to the target WUR group; and
determining (S230), by the first WUR based on the wake-up field, whether to perform the wake-up operation, wherein the wake-up operation is waking up, by the first WUR of a first receiving device, a first primary radio of the first receiving device,
**characterized in that**
the first wake-up frame comprises a time information field, and the time information field is used to indicate a first period value, wherein the first period value is used to indicate a time interval between a transmit time point of the first wake-up frame and a transmit time point of a subsequent second wake-up frame, and the second wake-up frame is used to indicate whether each WUR in the target WUR group performs the wake-up operation; and the method further comprises:
receiving, by the first WUR, the second wake-up frame based on the first period value; and
determining, by the first WUR based on the second wake-up frame, whether to wake up the first primary radio.

5. The method according to claim 4, wherein the time information field comprises period information and quantity information, the period information is used to indicate a period of transmitting a wake-up frame by the transmitting device, and the quantity information is used to indicate a quantity of wake-up frames between the first wake-up frame and the second wake-up frame.

6. The method according to claim 5, wherein the method further comprises:
updating, by the first WUR, a time interval between a receive time point of the first wake-up frame and a receive time point of the second wake-up frame to a second period value, wherein the second period value is determined by the transmitting device based on request information transmitted by the first receiving device, the request information is used to request the transmitting device to update a period value for the first receiving device, and the second period value is used to instruct the transmitting device to update the time interval between the transmit time point of the first wake-up frame and the transmit time point of the second wake-up frame to the second period value.

7. A transmitting device (1300, 1500), wherein the transmitting device is located in a communications system, the communications system comprises the transmitting device and at least one receiving device, each of the at least one receiving device comprises a wake-up radio WUR and a primary radio, and the transmitting device comprises:
a processor (1310, 1510), configured to generate a first wake-up frame, wherein the first wake-up frame comprises a WUR identifier field and a wake-up field, the WUR identifier field is used to indicate a WUR in a target WUR group, the target WUR group comprises n WURs of the at least one receiving device, the wake-up field is used to indicate whether each WUR in the target WUR group performs a wake-up operation, the wake-up operation is waking up, by a first WUR of a first receiving device, a first primary radio of the first receiving device , the first WUR is any WUR in the target WUR group, and n is a positive integer; and
a transceiver (1320, 1520), configured to transmit the first wake-up frame,
**characterized in that**
the processor (1310, 1510) is further configured to:
determine a first period value, wherein the first period value is used to indicate a time interval between a transmit time point of the first wake-up frame and a transmit time point of a subsequent second wake-up frame, and the second wake-up frame is used to indicate whether each WUR in the target WUR group performs the wake-up operation; and the first wake-up frame comprises a time information field, and the time information field is used to indicate the first period value;
the transceiver (1320, 1520) is specifically configured to:
transmit the second wake-up frame based on the first period value.

8. The transmitting device according to claim 7, wherein the time information field comprises period information and quantity information, the period information is used to indicate a period of transmitting a wake-up frame by the transmitting device, and the quantity information is used to indicate a quantity of wake-up frames between the first wake-up frame and the second wake-up frame.

9. The transmitting device according to claim 8, wherein the transceiver (1320, 1520) is further configured to:
receive request information transmitted by the first receiving device, wherein the request information is used to request the transmitting device to update a period value for the first receiving device; and
transmit a second period value to the first receiving device, wherein the second period value is used by the first WUR to update a time interval between a receive time point of the first wake-up frame and a receive time point of the second wake-up frame to the second period value; and
the processor (1310) is further configured to:
update the time interval between the transmit time point of the first wake-up frame and the transmit time point of the second wake-up frame to the second period value.

## Patentansprüche

1. Aufweckverfahren, wobei das Verfahren auf ein Kommunikationssystem angewendet ist, das Kommunikationssystem eine Sendeeinrichtung und mindestens eine Empfangseinrichtung umfasst, jede der mindestens einen Empfangseinrichtung einen Aufweckfunk WUR und einen Primärfunk umfasst und das Verfahren Folgendes umfasst:
Erzeugen (S210, S310, S410) eines ersten Aufweckrahmens durch die Sendeeinrichtung, wobei der erste Aufweckrahmen ein WUR-Kennungsfeld und ein Aufweckfeld umfasst, das WUR-Kennungsfeld dazu verwendet wird, einen WUR in einer Ziel-WUR-Gruppe anzugeben, die Ziel-WUR-Gruppe n WURs der mindestens einen Empfangseinrichtung umfasst, das Aufweckfeld dazu verwendet wird, anzugeben, ob jeder WUR in der Ziel-WUR-Gruppe einen Aufweckvorgang durchführt, der Aufweckvorgang Aufwecken eines ersten Primärfunks einer ersten Empfangseinrichtung durch einen ersten WUR der ersten Empfangseinrichtung ist, der erste WUR ein beliebiger WUR in der Ziel-WUR-Gruppe ist und n eine positive ganze Zahl ist; und
Senden (S220, S320, S420) des ersten Aufweckrahmens durch die Sendeeinrichtung,
**dadurch gekennzeichnet, dass**
der erste Aufweckrahmen ein Zeitinformationsfeld umfasst und das Zeitinformationsfeld dazu verwendet wird, einen ersten Periodenwert anzugeben,
wobei der erste Periodenwert dazu verwendet wird, ein Zeitintervall zwischen einem Sendezeitpunkt des ersten Aufweckrahmens und einem Sendezeitpunkt eines anschließenden zweiten Aufweckrahmens anzugeben, und der zweite Aufweckrahmen dazu verwendet wird, anzugeben, ob jeder WUR in der Ziel-WUR-Gruppe den Aufweckvorgang durchführt; und das Verfahren ferner Folgendes umfasst:
Senden des zweiten Aufweckrahmens durch die Sendeeinrichtung auf Grundlage des ersten Periodenwerts.

2. Verfahren nach Anspruch 1, wobei das Zeitinformationsfeld Periodeninformationen und Mengeninformationen umfasst, die Periodeninformationen dazu verwendet werden, eine Periode zum Senden eines Aufweckrahmens durch die Sendeeinrichtung anzugeben, und die Mengeninformationen dazu verwendet werden, eine Menge von Aufweckrahmen zwischen dem ersten Aufweckrahmen und dem zweiten Aufweckrahmen anzugeben.

3. Verfahren nach Anspruch 2, wobei das Verfahren ferner Folgendes umfasst:
Empfangen von durch die erste Empfangseinrichtung gesendeten Anforderungsinformationen durch die Sendeeinrichtung, wobei die Anforderungsinformationen dazu verwendet werden, anzufordern, dass die Sendeeinrichtung einen Periodenwert für die erste Empfangseinrichtung aktualisiert;
Senden eines zweiten Periodenwerts durch die Sendeeinrichtung an die erste Empfangseinrichtung, wobei der zweite Periodenwert durch den ersten WUR dazu verwendet wird, ein Zeitintervall zwischen einem Empfangszeitpunkt des ersten Aufweckrahmens und einem Empfangszeitpunkt des zweiten Aufweckrahmens auf den zweiten Periodenwert zu aktualisieren; und
Aktualisieren des Zeitintervalls zwischen dem Sendezeitpunkt des ersten Aufweckrahmens und dem Sendezeitpunkt des zweiten Aufweckrahmens durch die Sendeeinrichtung auf den zweiten Periodenwert.

4. Aufweckverfahren, wobei das Verfahren auf ein Kommunikationssystem angewendet ist, das Kommunikationssystem eine Sendeeinrichtung und mindestens eine Empfangseinrichtung umfasst, jede der mindestens einen Empfangseinrichtung einen Aufweckfunk WUR und einen Primärfunk umfasst und das Verfahren Folgendes umfasst:
Empfangen (S220) eines ersten Aufweckrahmens durch einen ersten WUR, wobei der erste Aufweckrahmen ein WUR-Kennungsfeld und ein Aufweckfeld umfasst, das WUR-Kennungsfeld dazu verwendet wird, einen WUR in einer Ziel-WUR-Gruppe anzugeben, die Ziel-WUR-Gruppe n WURs der mindestens einen Empfangseinrichtung umfasst, das Aufweckfeld dazu verwendet wird, anzugeben, ob jeder WUR in der Ziel-WUR-Gruppe einen Aufweckvorgang durchführt, der erste WUR ein beliebiger der WURs der mindestens einen Empfangseinrichtung ist und n eine positive ganze Zahl ist;
Bestimmen durch den ersten WUR auf Grundlage des WUR-Kennungsfelds, dass der erste WUR der Ziel-WUR-Gruppe angehört; und
Bestimmen (S230) durch den ersten WUR auf Grundlage des Aufweckfelds, ob der Aufweckvorgang durchgeführt werden soll, wobei der Aufweckvorgang Aufwecken eines ersten Primärfunks einer ersten Empfangseinrichtung durch den ersten WUR der ersten Empfangseinrichtung ist,
**dadurch gekennzeichnet, dass**
der erste Aufweckrahmen ein Zeitinformationsfeld umfasst und das Zeitinformationsfeld dazu verwendet wird, einen ersten Periodenwert anzugeben, wobei der erste Periodenwert dazu verwendet wird, ein Zeitintervall zwischen einem Sendezeitpunkt des ersten Aufweckrahmens und einem Sendezeitpunkt eines anschließenden zweiten Aufweckrahmens anzugeben, und der zweite Aufweckrahmen dazu verwendet wird, anzugeben, ob jeder WUR in der Ziel-WUR-Gruppe den Aufweckvorgang durchführt; und das Verfahren ferner Folgendes umfasst:
Empfangen des zweiten Aufweckrahmens durch den ersten WUR auf Grundlage des ersten Periodenwerts; und
Bestimmen durch den ersten WUR auf Grundlage des zweiten Aufweckrahmens, ob der erste Primärfunk aufgeweckt werden soll.

5. Verfahren nach Anspruch 4, wobei das Zeitinformationsfeld Periodeninformationen und Mengeninformationen umfasst, die Periodeninformationen dazu verwendet werden, eine Periode zum Senden eines Aufweckrahmens durch die Sendeeinrichtung anzugeben, und die Mengeninformationen dazu verwendet werden, eine Menge von Aufweckrahmen zwischen dem ersten Aufweckrahmen und dem zweiten Aufweckrahmen anzugeben.

6. Verfahren nach Anspruch 5, wobei das Verfahren ferner Folgendes umfasst:
Aktualisieren eines Zeitintervalls zwischen einem Empfangszeitpunkt des ersten Aufweckrahmens und einem Empfangszeitpunkt des zweiten Aufweckrahmens durch den ersten WUR auf einen zweiten Periodenwert, wobei der zweite Periodenwert durch die Sendeeinrichtung auf Grundlage von durch die erste Empfangseinrichtung gesendeten Anforderungsinformationen bestimmt wird, die Anforderungsinformationen dazu verwendet werden, anzufordern, dass die Sendeeinrichtung einen Periodenwert für die erste Empfangseinrichtung aktualisiert, und der zweite Periodenwert dazu verwendet wird, die Sendeeinrichtung anzuweisen, das Zeitintervall zwischen dem Sendezeitpunkt des ersten Aufweckrahmens und dem Sendezeitpunkt des zweiten Aufweckrahmens auf den zweiten Periodenwert zu aktualisieren.

7. Sendeeinrichtung (1300, 1500), wobei sich die Sendeeinrichtung in einem Kommunikationssystem befindet, das Kommunikationssystem die Sendeeinrichtung und mindestens eine Empfangseinrichtung umfasst, jede der mindestens einen Empfangseinrichtung einen Aufweckfunk WUR und einen Primärfunk umfasst und die Sendeeinrichtung Folgendes umfasst:
einen Prozessor (1310, 1510), der dazu konfiguriert ist, einen ersten Aufweckrahmen zu erzeugen, wobei der erste Aufweckrahmen ein WUR-Kennungsfeld und ein Aufweckfeld umfasst, das WUR-Kennungsfeld dazu verwendet wird, einen WUR in einer Ziel-WUR-Gruppe anzugeben, die Ziel-WUR-Gruppe n WURs der mindestens einen Empfangseinrichtung umfasst, das Aufweckfeld dazu verwendet wird, anzugeben, ob jeder WUR in der Ziel-WUR-Gruppe einen Aufweckvorgang durchführt, der Aufweckvorgang Aufwecken eines ersten Primärfunks einer ersten Empfangseinrichtung durch einen ersten WUR der ersten Empfangseinrichtung ist, der erste WUR ein beliebiger WUR in der Ziel-WUR-Gruppe ist und n eine positive ganze Zahl ist; und
einen Sendeempfänger (1320, 1520), der dazu konfiguriert ist, den ersten Aufweckrahmen zu senden,
**dadurch gekennzeichnet, dass**
der Prozessor (1310, 1510) ferner zu Folgendem konfiguriert ist:
Bestimmen eines ersten Periodenwerts, wobei der erste Periodenwert dazu verwendet wird, ein Zeitintervall zwischen einem Sendezeitpunkt des ersten Aufweckrahmens und einem Sendezeitpunkt eines anschließenden zweiten Aufweckrahmens anzugeben, und der zweite Aufweckrahmen dazu verwendet wird, anzugeben, ob jeder WUR in der Ziel-WUR-Gruppe den Aufweckvorgang durchführt; und der erste Aufweckrahmen ein Zeitinformationsfeld umfasst und das Zeitinformationsfeld dazu verwendet wird, den ersten Periodenwert anzugeben;
der Sendeempfänger (1320, 1520) spezifisch zu Folgendem konfiguriert ist:
Senden des zweiten Aufweckrahmens auf Grundlage des ersten Periodenwerts.

8. Sendeeinrichtung nach Anspruch 7, wobei das Zeitinformationsfeld Periodeninformationen und Mengeninformationen umfasst, die Periodeninformationen dazu verwendet werden, eine Periode zum Senden eines Aufweckrahmens durch die Sendeeinrichtung anzugeben, und die Mengeninformationen dazu verwendet werden, eine Menge von Aufweckrahmen zwischen dem ersten Aufweckrahmen und dem zweiten Aufweckrahmen anzugeben.

9. Sendeeinrichtung nach Anspruch 8, wobei der Sendeempfänger (1320, 1520) ferner zu Folgendem konfiguriert ist:
Empfangen von durch die erste Empfangseinrichtung gesendeten Anforderungsinformationen, wobei die Anforderungsinformationen dazu verwendet werden, anzufordern, dass die Sendeeinrichtung einen Periodenwert für die erste Empfangseinrichtung aktualisiert; und
Senden eines zweiten Periodenwerts an die erste Empfangseinrichtung, wobei der zweite Periodenwert durch den ersten WUR dazu verwendet wird, ein Zeitintervall zwischen einem Empfangszeitpunkt des ersten Aufweckrahmens und einem Empfangszeitpunkt des zweiten Aufweckrahmens auf den zweiten Periodenwert zu aktualisieren; und
der Prozessor (1310) ferner zu Folgendem konfiguriert ist:
Aktualisieren des Zeitintervalls zwischen dem Sendezeitpunkt des ersten Aufweckrahmens und dem Sendezeitpunkt des zweiten Aufweckrahmens auf den zweiten Periodenwert.

## Revendications

1. Procédé de réveil, dans lequel le procédé est appliqué à un système de communications, le système de communications comprend un dispositif de transmission et au moins un dispositif de réception, chacun de l'au moins un dispositif de réception comprend une radio de réveil, WUR, et une radio primaire, et le procédé comprend :
la génération (S210, S310, S410), par le dispositif de transmission, d'une première trame de réveil, dans lequel la première trame de réveil comprend un champ d'identifiant de WUR et un champ de réveil, le champ d'identifiant de WUR est utilisé pour indiquer une WUR dans un groupe de WUR cibles, le groupe de WUR cibles comprend n WUR de l'au moins un dispositif de réception, le champ de réveil est utilisé pour indiquer si chaque WUR dans le groupe de WUR cibles met en œuvre une opération de réveil, l'opération de réveil est un réveil, par une première WUR d'un premier dispositif de réception, d'une première radio primaire du premier dispositif de réception, la première WUR est une quelconque WUR dans le groupe de WUR cibles, et n est un entier positif ; et
la transmission (S220, S320, S420), par le dispositif de transmission, de la première trame de réveil,
**caractérisé en ce que**
la première trame de réveil comprend un champ d'informations de temps, et le champ d'informations de temps est utilisé pour indiquer une première valeur de période,
dans lequel la première valeur de période est utilisée pour indiquer un intervalle de temps entre un moment de transmission de la première trame de réveil et un moment de transmission d'une seconde trame de réveil ultérieure, et la seconde trame de réveil est utilisée pour indiquer si chaque WUR dans le groupe de WUR cibles met en œuvre l'opération de réveil ; et le procédé comprend en outre :
la transmission, par le dispositif de transmission, de la seconde trame de réveil sur la base de la première valeur de période.

2. Procédé selon la revendication 1, dans lequel le champ d'informations de temps comprend des informations de période et des informations de quantité, les informations de période sont utilisées pour indiquer une période de transmission d'une trame de réveil par le dispositif de transmission, et les informations de quantité sont utilisées pour indiquer une quantité de trames de réveil entre la première trame de réveil et la seconde trame de réveil.

3. Procédé selon la revendication 2, dans lequel le procédé comprend en outre :
la réception, par le dispositif de transmission, d'informations de demande transmises par le premier dispositif de réception, dans lequel les informations de demande sont utilisées pour demander au dispositif de transmission de mettre à jour une valeur de période pour le premier dispositif de réception ;
la transmission, par le dispositif de transmission, d'une seconde valeur de période au premier dispositif de réception, dans lequel la seconde valeur de période est utilisée par la première WUR pour mettre à jour un intervalle de temps entre un moment de réception de la première trame de réveil et un moment de réception de la seconde trame de réveil avec la seconde valeur de période ; et
la mise à jour, par le dispositif de transmission, de l'intervalle de temps entre le moment de transmission de la première trame de réveil et le moment de transmission de la seconde trame de réveil avec la seconde valeur de période.

4. Procédé de réveil, dans lequel le procédé est appliqué à un système de communications, le système de communications comprend un dispositif de transmission et au moins un dispositif de réception, chacun de l'au moins un dispositif de réception comprend une radio de réveil, WUR, et une radio primaire, et le procédé comprend :
la réception (S220), par une première WUR, d'une première trame de réveil, dans lequel la première trame de réveil comprend un champ d'identifiant de WUR et un champ de réveil, le champ d'identifiant de WUR est utilisé pour indiquer une WUR dans un groupe de WUR cibles, le groupe de WUR cibles comprend n WUR de l'au moins un dispositif de réception, le champ de réveil est utilisé pour indiquer si chaque WUR dans le groupe de WUR cibles met en œuvre une opération de réveil, la première WUR est l'une quelconque des WUR de l'au moins un dispositif de réception, et n est un entier positif ;
le fait de déterminer, par la première WUR sur la base du champ d'identifiant de WUR, que la première WUR appartient au groupe de WUR cibles ; et
le fait de déterminer (S230), par la première WUR sur la base du champ de réveil, s'il faut mettre en œuvre l'opération de réveil, dans lequel l'opération de réveil est un réveil, par la première WUR d'un premier dispositif de réception, d'une première radio primaire du premier dispositif de réception,
**caractérisé en ce que**
la première trame de réveil comprend un champ d'informations de temps, et le champ d'informations de temps est utilisé pour indiquer une première valeur de période, dans lequel la première valeur de période est utilisée pour indiquer un intervalle de temps entre un moment de transmission de la première trame de réveil et un moment de transmission d'une seconde trame de réveil ultérieure, et la seconde trame de réveil est utilisée pour indiquer si chaque WUR dans le groupe de WUR cibles met en œuvre l'opération de réveil ; et le procédé comprend en outre :
la réception, par la première WUR, de la seconde trame de réveil sur la base de la première valeur de période ; et
le fait de déterminer, par la première WUR sur la base de la seconde trame de réveil, s'il faut réveiller la première radio primaire.

5. Procédé selon la revendication 4, dans lequel le champ d'informations de temps comprend des informations de période et des informations de quantité, les informations de période sont utilisées pour indiquer une période de transmission d'une trame de réveil par le dispositif de transmission, et les informations de quantité sont utilisées pour indiquer une quantité de trames de réveil entre la première trame de réveil et la seconde trame de réveil.

6. Procédé selon la revendication 5, dans lequel le procédé comprend en outre :
la mise à jour, par la première WUR, d'un intervalle de temps entre un moment de réception de la première trame de réveil et un moment de réception de la seconde trame de réveil avec une seconde valeur de période, dans lequel la seconde valeur de période est déterminée par le dispositif de transmission sur la base d'informations de demande transmises par le premier dispositif de réception, les informations de demande sont utilisées pour demander au dispositif de transmission de mettre à jour une valeur de période pour le premier dispositif de réception, et la seconde valeur de période est utilisée pour donner l'ordre au dispositif de transmission de mettre à jour l'intervalle de temps entre le moment de transmission de la première trame de réveil et le moment de transmission de la seconde trame de réveil avec la seconde valeur de période.

7. Dispositif de transmission (1300, 1500), dans lequel le dispositif de transmission est situé dans un système de communications, le système de communications comprend le dispositif de transmission et au moins un dispositif de réception, chacun de l'au moins un dispositif de réception comprend une radio de réveil, WUR, et une radio primaire, et le dispositif de transmission comprend :
un processeur (1310, 1510), conçu pour générer une première trame de réveil, dans lequel la première trame de réveil comprend un champ d'identifiant de WUR et un champ de réveil, le champ d'identifiant de WUR est utilisé pour indiquer une WUR dans un groupe de WUR cibles, le groupe de WUR cibles comprend n WUR de l'au moins un dispositif de réception, le champ de réveil est utilisé pour indiquer si chaque WUR dans le groupe de WUR cibles met en œuvre une opération de réveil, l'opération de réveil est un réveil, par une première WUR d'un premier dispositif de réception, d'une première radio primaire du premier dispositif de réception, la première WUR est une quelconque WUR dans le groupe de WUR cibles, et n est un entier positif ; et
un émetteur-récepteur (1320, 1520), conçu pour transmettre la première trame de réveil,
**caractérisé en ce que**
le processeur (1310, 1510) est en outre conçu pour :
déterminer une première valeur de période, dans lequel la première valeur de période est utilisée pour indiquer un intervalle de temps entre un moment de transmission de la première trame de réveil et un moment de transmission d'une seconde trame de réveil ultérieure, et la seconde trame de réveil est utilisée pour indiquer si chaque WUR dans le groupe de WUR cibles met en œuvre l'opération de réveil ; et la première trame de réveil comprend un champ d'informations de temps, et le champ d'informations de temps est utilisé pour indiquer la première valeur de période ;
l'émetteur-récepteur (1320, 1520) est spécifiquement conçu pour :
transmettre la seconde trame de réveil sur la base de la première valeur de période.

8. Dispositif de transmission selon la revendication 7, dans lequel le champ d'informations de temps comprend des informations de période et des informations de quantité, les informations de période sont utilisées pour indiquer une période de transmission d'une trame de réveil par le dispositif de transmission, et les informations de quantité sont utilisées pour indiquer une quantité de trames de réveil entre la première trame de réveil et la seconde trame de réveil.

9. Dispositif de transmission selon la revendication 8, dans lequel l'émetteur-récepteur (1320, 1520) est en outre conçu pour :
recevoir des informations de demande transmises par le premier dispositif de réception, dans lequel les informations de demande sont utilisées pour demander au dispositif de transmission de mettre à jour une valeur de période pour le premier dispositif de réception ; et
transmettre une seconde valeur de période au premier dispositif de réception, dans lequel la seconde valeur de période est utilisée par la première WUR pour mettre à jour un intervalle de temps entre un moment de réception de la première trame de réveil et un moment de réception de la seconde trame de réveil avec la seconde valeur de période ; et
le processeur (1310) est en outre conçu pour :
mettre à jour l'intervalle de temps entre le moment de transmission de la première trame de réveil et le moment de transmission de la seconde trame de réveil avec la seconde valeur de période.
